(19) **Europäisches Patentamt / European Patent Office / Office européen des brevets**

(11) **EP 4 524 620 A1**

(12) # EUROPEAN PATENT APPLICATION

(43) Date of publication:
**19.03.2025 Bulletin 2025/12**

(21) Application number: **24199764.2**

(22) Date of filing: **11.09.2024**

(51) International Patent Classification (IPC):
**G02B 1/118** (2015.01)  **G02B 5/20** (2006.01)
**G02B 5/28** (2006.01)

(52) Cooperative Patent Classification (CPC):
**G02B 1/118; G02B 5/208; G02B 5/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 US 202363582560 P**

(71) Applicant: **Largan Industrial Optics Co., Ltd.**
**Taichung City R.O.C 407019 (TW)**

(72) Inventors:
- **Chen, Tzu-Kan**
  **407019 Taichung City R.O.C (TW)**
- **Liu, Ti Lun**
  **407019 Taichung City R.O.C (TW)**
- **Huang, Jih Chung**
  **407019 Taichung City R.O.C (TW)**
- **Wang, Yu-Pin**
  **407019 Taichung City R.O.C (TW)**
- **Lai, Yu-Chen**
  **407019 Taichung City R.O.C (TW)**
- **Chou, Ming-Ta**
  **407019 Taichung City R.O.C (TW)**

(74) Representative: **Lippert Stachow Patentanwälte Rechtsanwälte**
**Partnerschaft mbB**
**Postfach 30 02 08**
**51412 Bergisch Gladbach (DE)**

(54) **IMAGE SENSOR MODULE, CAMERA MODULE AND ELECTRONIC DEVICE**

(57) An image sensor module includes a sensing surface, a filter element and a first anti-reflective microstructure, wherein the filter element faces towards the sensing surface, and the first anti-reflective microstructure is disposed on the sensing surface. The filter element includes a substrate, an optical deposition layer structure and an optical coating layer, wherein the optical deposition layer structure is disposed on a side of the substrate away from the sensing surface, and the optical coating layer and the optical deposition layer structure are correspondingly disposed on a side of the substrate facing towards the sensing surface. The optical deposition layer structure is multilayer. An air layer is formed between the first anti-reflective microstructure and the filter element, and the first anti-reflective microstructure and the air layer partially overlap at a direction vertical to the sensing surface.

Fig. 1C

**EP 4 524 620 A1**

**Description**

**BACKGROUND**

Technical Field

The present disclosure relates to an image sensor module and a camera module. More particularly, the present disclosure relates to an image sensor module and a camera module applicable to portable electronic devices.

Description of Related Art

In the recent years, portable electronic devices have developed rapidly. For example, intelligent electronic devices and tablets have been filled in the lives of modern people, and camera modules and image sensor modules mounted on portable electronic devices have also prospered. Particularly, the image sensor modules are highly penetrable to visible lights and capable of blocking invisible lights so as to improve the optical quality.

Moreover, the existing image sensor modules combine various coating layers and coatings to give more functions of filter elements in the image sensor modules in order to improve the optical quality. However, this causes the transmittance of the filter elements to decrease seriously. Therefore, as requirements of night-photograph increase, developing an image sensor module with high transmittance becomes an important demand in the industry.

**SUMMARY**

According to one aspect of the present disclosure, an image sensor module includes a sensing surface, a filter element, and a first anti-reflective microstructure, wherein the filter element faces towards the sensing surface. The filter element includes a substrate, an optical deposition layer structure, and an optical coating layer. The optical deposition layer structure is disposed on one side of the substrate away from the sensing surface, wherein the optical deposition layer structure is multilayered, and a layer number of the optical deposition layer structure is more than 10. The optical coating layer is disposed corresponding to the optical deposition layer structure and on one side of the substrate facing towards the sensing surface, wherein a layer number of the optical coating layer includes one, and a thickness of the optical coating layer is between 900 nm to 5 $\mu$m. The first anti-reflective microstructure is disposed on the sensing surface, an air layer is formed between the first anti-reflective microstructure and the filter element, and the first anti-reflective microstructure partially overlaps with the air layer in a direction perpendicular to the sensing surface, wherein a transmittance of the filter element in a wavelength range of 450 nm to 550 nm is greater than or equal to 80%, a first wavelength greater than 550 nm that provides the transmittance of the filter element being 50% is T50, and a reflectance of the first anti-reflective microstructure in a wavelength range of 450 nm to the first wavelength is less than or equal to 0.93%, the following condition is satisfied: 600 nm $\leq$ T50 $\leq$ 720 nm.

According to the image sensor module of the aforementioned aspect, wherein the reflectance of the first anti-reflective microstructure in the wavelength range of 450 nm to the first wavelength is less than or equal to 0.48%.

According to the image sensor module of the aforementioned aspect, wherein the filter element further includes a second anti-reflective microstructure disposed on one side of the optical coating layer away from the optical deposition layer structure, and partially overlapping with the air layer in the direction perpendicular to the sensing surface, an average reflectance of the second anti-reflective microstructure in the wavelength range of 450 nm to the first wavelength is less than 0.93%.

According to the image sensor module of the aforementioned aspect, the image sensor module further includes a light blocking layer disposed between the optical coating layer and the first anti-reflective microstructure.

According to the image sensor module of the aforementioned aspect, wherein the filter element further includes an isolation layer disposed between the optical coating layer and the air layer.

According to the image sensor module of the aforementioned aspect, wherein the substrate includes a side surface extending along the optical deposition layer structure towards the optical coating layer, wherein the optical coating layer is not disposed on the side surface.

According to the image sensor module of the aforementioned aspect, the image sensor module further includes an image sensor forming the sensing surface and a non-sensing surface, wherein the non-sensing surface is adjacent to a periphery of the sensing surface, and the first anti-reflective microstructure is disposed on at least one portion of the non-sensing surface.

According to the image sensor module of the aforementioned aspect, the image sensor module further includes an image sensor and a molded body. The image sensor forms the sensing surface and a non-sensing surface, wherein the non-sensing surface is adjacent to a periphery of the sensing surface. The molded body is formed on the image sensor, the molded body includes an inner lateral surface, and the inner lateral surface faces towards a center of the sensing surface, wherein the inner lateral surface extends from the non-sensing surface to a direction away from the sensing surface, and the first anti-reflective microstructure is disposed on at least one portion of the inner lateral surface.

According to the image sensor module of the aforementioned aspect, wherein the image sensor module includes an installing position and a filter element holder. The filter element holder is disposed on the installing position, wherein the filter element holder supports the filter element, and the first anti-reflective microstructure is disposed on at least one portion of the installing position.

According to the image sensor module of the aforementioned aspect, wherein the substrate is a red-light absorbing glass.

According to the image sensor module of the aforementioned aspect, wherein a reflectance of the optical deposition layer structure in the wavelength range of 450 nm to 550 nm is less than or equal to 10%; a wavelength greater than 550 nm that provides the reflectance of the optical deposition layer structure being 50% is R50; the first wavelength greater than 550 nm that provides the transmittance of the filter element being 50% is T50, and the following conditions are satisfied: 600 nm ≤ R50 ≤ 720 nm and R50 ≥ T50.

According to the image sensor module of the aforementioned aspect, wherein a second wavelength less than 450 nm that provides the transmittance of the filter element being 50% is T50-B, the second wavelength is within a wavelength range of 400 nm to 450 nm, and the reflectance of the first anti-reflective microstructure in a wavelength range of the second wavelength to the first wavelength is less than or equal to 0.93%.

According to the image sensor module of the aforementioned aspect, wherein the optical coating layer is an organic material layer.

According to one aspect of the present disclosure, a camera module includes an imaging lens assembly, and the image sensor module of the aforementioned aspect, wherein the image sensor module is disposed on an image side of the imaging lens assembly.

According to one aspect of the present disclosure, an electronic device includes the camera module of the aforementioned aspect.

According to one aspect of the present disclosure, an image sensor module includes a sensing surface, a filter element, an air layer, and an anti-reflective microstructure, wherein the filter element faces towards the sensing surface. The filter element includes a substrate, an optical deposition layer structure and an optical coating layer. The optical deposition layer structure is disposed on one side of the substrate away from the sensing surface, wherein the optical deposition layer structure is multilayered, and a layer number of the optical deposition layer structure is more than 10. The optical coating layer is disposed corresponding to the optical deposition layer structure and on one side of the substrate facing towards the sensing surface, wherein a layer number of the optical coating layer includes one, and a thickness of the optical coating layer is between 900 nm to 5 μm. The air layer is formed between the optical coating layer and the sensing surface. The anti-reflective microstructure is adjacent to the air layer, and partially overlaps with the air layer in a direction perpendicular to the sensing surface, wherein a transmittance of the filter element in a wavelength range of 450 nm to 550 nm is greater than or equal to 80%, a first wavelength greater than 550 nm that provides the transmittance of the filter element being 50% is T50, and a reflectance of the anti-reflective microstructure in a wavelength range of 450 nm to the first wavelength is less than or equal to 0.93%, the following condition is satisfied: 600 nm ≤ T50 ≤ 720 nm.

According to the image sensor module of the aforementioned aspect, wherein the reflectance of the anti-reflective microstructure in the wavelength range of 450 nm to the first wavelength is less than or equal to 0.48%.

According to the image sensor module of the aforementioned aspect, the image sensor module further includes a light blocking layer disposed between the optical coating layer and the anti-reflective microstructure.

According to the image sensor module of the aforementioned aspect, wherein the substrate includes a side surface extending along a direction of a thickness of the substrate, wherein the optical coating layer is not disposed on the side surface.

According to the image sensor module of the aforementioned aspect, the image sensor module further includes a filter element holder at least partially overlapping with a projection of the anti-reflective microstructure parallel to the sensing surface, wherein the filter element is disposed on the filter element holder.

According to the image sensor module of the aforementioned aspect, wherein the substrate is a red-light absorbing glass.

According to the image sensor module of the aforementioned aspect, wherein a reflectance of the optical deposition layer structure in the wavelength range of 450 nm to 550 nm is less than or equal to 10%; a wavelength greater than 550 nm that provides the reflectance of the optical deposition layer structure being 50% is R50; the first wavelength greater than 550 nm that provides the transmittance of the filter element being 50% is T50, and the following conditions are satisfied: 600 nm ≤ R50 ≤ 720 nm and R50 ≥ T50.

According to the image sensor module of the aforementioned aspect, wherein a second wavelength less than 450 nm that provides the transmittance of the filter element being 50% is T50-B, the second wavelength is within a wavelength range of 400 nm to 450 nm, and the reflectance of the anti-reflective microstructure in a wavelength range of the second wavelength to the first wavelength is less than or equal to 0.93%.

According to the image sensor module of the aforementioned aspect, wherein the optical coating layer is an organic material layer.

According to the image sensor module of the aforementioned aspect, wherein the filter element further includes an isolation layer disposed between the optical coating layer and the anti-reflective microstructure, and the isolation layer is a multilayered film.

According to the image sensor module of the aforementioned aspect, wherein the transmittance of the filter element in the wavelength range of 450 nm to 550 nm is greater than or equal to 84%; a maximum value of the transmittance of the filter element in the wavelength range of 450 nm to 550 nm is greater than or equal to 88%; the reflectance of the anti-reflective microstructure in a wavelength range of 400 nm to 750 nm is less than or equal to 0.25%; a reflectance of the optical deposition layer structure in the wavelength range of 450 nm to 550 nm is less than or equal to 5%; a wavelength greater than 550 nm that provides the reflectance of the optical deposition layer structure being 50% is R50; the first wavelength greater than 550 nm that provides the transmittance of the filter element being 50% is T50, and the following conditions are satisfied: $600\ nm \leq T50 \leq 700\ nm$, $650\ nm \leq R50 \leq 720\ nm$ and $R50 - T50 \geq 3\ nm$.

According to one aspect of the present disclosure, a camera module includes an imaging lens assembly, and the image sensor module of the aforementioned aspect, wherein the image sensor module is disposed on an image side of the imaging lens assembly.

According to one aspect of the present disclosure, an electronic device includes the camera module of the aforementioned aspect.

**BRIEF DESCRIPTION OF THE DRAWINGS**

The present disclosure can be more fully understood by reading the following detailed description of the embodiment, with reference made to the accompanying drawings as follows:

Fig. 1A is a schematic view of a camera module according to the 1st embodiment of the present disclosure.

Fig. 1B is a cross-sectional view of the camera module according to the 1st embodiment in Fig. 1A.

Fig. 1C is a schematic view of an image sensor module according to the 1st example of the 1st embodiment in Fig. 1A.

Fig. 1D is a partial enlarged view of the image sensor module according to the 1 st example of the 1 st embodiment in Fig. 1C.

Fig. 1E is a data diagram of the image sensor module according to the 1st example of the 1st embodiment in Fig. 1C.

Fig. 1F is a schematic view of an image sensor module according to the 2nd example of the 1st embodiment in Fig. 1A.

Fig. 1G is a partial enlarged view of the image sensor module according to the 2nd example of the 1st embodiment in Fig. 1F.

Fig. 1H is a schematic view of an image sensor module according to the 3rd example of the 1st embodiment in Fig. 1A.

Fig. 1I is a schematic view of an image sensor module according to the 4th example of the 1st embodiment in Fig. 1A.

Fig. 1J is a schematic view of an image sensor module according to the 5th example of the 1st embodiment in Fig. 1A.

Fig. 1K is a schematic view of an image sensor module according to the 6th example of the 1st embodiment in Fig. 1A.

Fig. 1L is a schematic view of an image sensor module according to the 7th example of the 1st embodiment in Fig. 1A.

Fig. 1M is a transmittance diagram of a filter element according to the 1st embodiment in Fig. 1A.

Fig. 1N is another transmittance diagram of the filter element according to the 1st embodiment in Fig. 1A.

Fig. 1O is a reflectance diagram of an optical deposition layer structure according to the 1st embodiment in Fig. 1A.

Fig. 1P is a reflectance diagram of an anti-reflective microstructure according to the 1st embodiment in Fig. 1A.

Fig. 2A is a schematic view of an electronic device according to the 2nd embodiment of the present disclosure.

Fig. 2B is another schematic view of the electronic device according to the 2nd embodiment in Fig. 2A.

Fig. 3 is a schematic view of an electronic device applied to a drone according to the 3rd embodiment of the present disclosure.

Fig. 4 is a schematic view of an electronic device applied to a car according to the 4th embodiment of the present disclosure.

## DETAILED DESCRIPTION

The present disclosure provides an image sensor module that includes a sensing surface and a filter element. The filter element faces towards the sensing surface, and includes a substrate, an optical deposition layer structure, and an optical coating layer. The optical deposition layer structure is disposed on one side of the substrate away from the sensing surface, the optical deposition layer structure is multilayered, and a layer number of the optical deposition layer structure is more than 10. The optical coating layer is disposed corresponding to the optical deposition layer structure and on one side of the substrate facing towards the sensing surface, wherein a layer number of the optical coating layer includes one, and a thickness of the optical coating layer is between 900 nm to 5 $\mu$m. When a transmittance of the filter element in a wavelength range of 450 nm to 550 nm is greater than or equal to 80%, and a first wavelength greater than 550 nm that provides the transmittance of the filter element being 50% is T50, the following condition is satisfied: 600 nm $\leq$ T50 $\leq$ 720 nm.

Moreover, there are light-collecting arrays on the sensing surface in order to improve a light-collecting efficiency of the image sensor.

In detail, the layer number of the optical deposition layer structure can be more than or equal to 36, and can be further more than or equal to 72, wherein the optical deposition layer structure with high layer number can be a superposition of multiple coatings, but the present disclosure is not limited thereto. Moreover, different reflectances can be provided by arranging layers with different compositions adjacent to the optical deposition layer structure.

The image sensor module can include an air layer and an anti-reflective microstructure, wherein the air layer is formed between the optical coating layer and the sensing surface, the anti-reflective microstructure is adjacent to the air layer, and the anti-reflective microstructure partially overlaps with the air layer in a direction perpendicular to the sensing surface. A reflectance of the anti-reflective microstructure in a wavelength range of 450 nm to the first wavelength is less than or equal to 0.93%. It is favorable for reducing a loss on the sensing surface by arranging the reflectance of the anti-reflective microstructure corresponding to the transmittance of the filter element and disposing the anti-reflective microstructure on a surface of the light-collecting arrays of the sensing surface. Moreover, the reflectance of the anti-reflective microstructure in the wavelength range of 450 nm to the first wavelength can be less than or equal to 0.48% and the air layer is used to avoid a thermal effect on a lifetime of the optical coating layer.

Furthermore, a portion where the anti-reflective microstructure partially overlaps with the air layer in a direction perpendicular to the sensing surface can be defined as an overlapping area, and the overlapping area allows lights to gradually enter the sensing surface so as to improve the transmittance, wherein a thickness of the overlapping area can be 50 nm to 500 nm, and the thickness of the overlapping area can further be 75 nm to 250 nm. The overlapping area can directly contact the sensing surface, or there can be a base layer between the overlapping area and the sensing surface.

A second wavelength less than 450 nm that provides the transmittance of the filter element being 50% is T50-B, the second wavelength is within a wavelength range of 400 nm to 450 nm, and the reflectance of the anti-reflective microstructure in a wavelength range of the second wavelength to the first wavelength is less than or equal to 0.93%.

Alternatively, the image sensor module can include a first anti-reflective microstructure, and the filter element can further include a second anti-reflective microstructure, wherein the first anti-reflective microstructure is disposed on the sensing surface, an air layer is formed between the first anti-reflective microstructure and the filter element, and the first anti-reflective microstructure partially overlaps with the air layer in a direction perpendicular to the sensing surface; the second anti-reflective microstructure can be disposed on one side of the optical coating layer away from the optical deposition layer structure, and partially overlap with the air layer in the direction perpendicular to the sensing surface. A reflectance of the first anti-reflective microstructure in a wavelength range of 450 nm to the first wavelength can be less than or equal to 0.93%, an average reflectance of the second anti-reflective microstructure in the wavelength range of 450 nm to the first wavelength can be less than 0.93%. Particularly, the reflectance of the first anti-reflective microstructure corresponds to the transmittance of the filter element so as to reduce a loss on the sensing surface, and which can further reduce a reflection from one side of the filter element facing the sensing surface to further improve the transmittance. Moreover, the reflectance of the first anti-reflective microstructure in the wavelength range of 450 nm to the first wavelength is less than or equal to 0.48%.

A second wavelength less than 450 nm that provides the transmittance of the filter element being 50% is T50-B, the second wavelength is within a wavelength range of 400 nm to 450 nm, and the reflectance of the first anti-reflective microstructure in a wavelength range of the second wavelength to the first wavelength can be less than or equal to 0.93%.

The image sensor module can further include a light blocking layer, wherein the light blocking layer can be disposed between the optical coating layer and the first anti-reflective microstructure or between the optical coating layer and the anti-reflective microstructure. Therefore, it is favorable for avoiding a flare caused by a reflection from a surface of the light blocking layer so as to improve the optical quality.

The filter element can further include an isolation layer, wherein the isolation layer can be disposed between the optical coating layer and the air layer or between the optical coating layer and the anti-reflective microstructure. Therefore, it is favorable for improving an adhesion of the anti-reflective microstructure and a chemical-stability of the optical coating layer so as to improve and to ensure a yield. Particularly, the isolation layer can be a metal oxide layer, and can be a single layer or includes multiple layers.

The substrate can include a side surface, wherein the side surface can extend along the optical deposition layer structure towards the optical coating layer or extend along a direction of a thickness of the substrate, wherein the optical coating layer is not disposed on the side surface. Therefore, it is favorable for avoiding a non-uniform of the optical coating layer so as to ensure the optical quality.

The image sensor module can further include an image sensor, wherein the image sensor can form the sensing surface and a non-sensing surface, the sensing surface can be for collecting lights passing through the filter element, the non-sensing surface can be adjacent to a periphery of the sensing surface, and the first anti-reflective microstructure is disposed on at least one portion of the non-sensing surface. Therefore, it is favorable for reducing impacts of structure defects on the edge of the first anti-reflective microstructure on the optical quality so as to ensure the optical quality of the periphery of the sensing surface. Particularly, the non-sensing surface can include a plurality of connecting pads and the non-sensing surface can electrically connect to a circuit by the connecting pads.

The image sensor module can further include a molded body, wherein the molded body can be formed on the image sensor, and the molded body can include an inner lateral surface. The inner lateral surface can face towards a center of the sensing surface, the inner lateral surface can extend from the non-sensing surface to a direction away from the sensing surface, and the first anti-reflective microstructure can be disposed on at least one portion of the inner lateral surface. Therefore, it is favorable for reducing a possibility of a flare caused by the molded body. Particularly, the molded body and the image sensor can be integrally molded via insert-molding.

The image sensor module can further include an installing position and a filter element holder, wherein the filter element holder can be disposed on the installing position, the filter element holder can support the filter element, and the first anti-reflective microstructure can be disposed on at least one portion of the installing position. It is favorable for preventing a flare caused by a reflection from an inner structure via the first anti-reflective microstructure further extending to the installing position of the filter element holder so as to improve the optical quality.

Moreover, the filter element holder can at least partially overlap with a projection of the anti-reflective microstructure parallel to the sensing surface, and the filter element can be disposed on the filter element holder. Particularly, the anti-reflective microstructure can further partially overlap with the filter element, which is favorable for preventing a flare caused by a reflection from an inner structure so as to improve the optical quality.

The substrate can be a red-light absorbing glass. It is favorable for matching sensing characteristics of the image sensor via adsorbing part of the red light by the red-light absorbing glass so as to improve the optical quality. Particularly, the red-light absorbing glass appears blue or blue-green through absorbing the red light, wherein the red-light absorbing glass can be a blue glass, but the present disclosure is not limited thereto.

The optical coating layer can be an organic material layer. Therefore, it is favorable for reducing a thermal deterioration of the optical deposition layer structure during a process of forming the optical coating layer so as to improve a lifetime of the filter element. In detail, the process of forming the optical coating layer can be spin-coating, photo-curing, heat-curing and so on, but the present disclosure is not limited thereto.

A reflectance of the optical deposition layer structure in the wavelength range of 450 nm to 550 nm is less than or equal to 10%. A wavelength greater than 550 nm that provides the reflectance of the optical deposition layer structure being 50% is R50; the first wavelength greater than 550 nm that provides the transmittance of the filter element being 50% is T50, and the following conditions can be satisfied: 600 nm ≤ R50 ≤ 720 nm; and R50 ≥ T50. Therefore, the transmittance of the filter element corresponds to the reflectance of the optical deposition layer structure so as to reduce a generation of the flare.

The transmittance of the filter element in the wavelength range of 450 nm to 550 nm can be greater than or equal to 84%; a maximum value of the transmittance of the filter element in the wavelength range of 450 nm to 550 nm can be greater than or equal to 88%; the reflectance of the anti-reflective microstructure in a wavelength range of 400 nm to 750 nm can be less than or equal to 0.25%; the reflectance of the optical deposition layer structure in the wavelength range of 450 nm to 550 nm can be less than or equal to 5%; a wavelength greater than 550 nm that provides the reflectance of the optical deposition layer structure being 50% is R50; the first wavelength greater than 550 nm that provides the transmittance of the filter element being 50% is T50, and the following conditions are satisfied: 600 nm ≤ T50 ≤ 700 nm; 650 nm ≤ R50 ≤ 720 nm; and R50 - T50 ≥ 3 nm. Therefore, with a premise of that the optical coating layer must exist, it is favorable for improving the transmittance and reducing a probability of the generation of the flare.

Each of the aforementioned features of the image sensor module can be utilized in various combinations for achieving the corresponding effects.

The present disclosure provides a camera module that includes an imaging lens assembly and the aforementioned image sensor module, wherein the image sensor module is disposed on an image side of the imaging lens assembly.

The present disclosure provides an electronic device that includes the aforementioned camera module.

According to the aforementioned descriptions, specific embodiments and specific examples are provided, and illustrated via figures.

<1st embodiment>

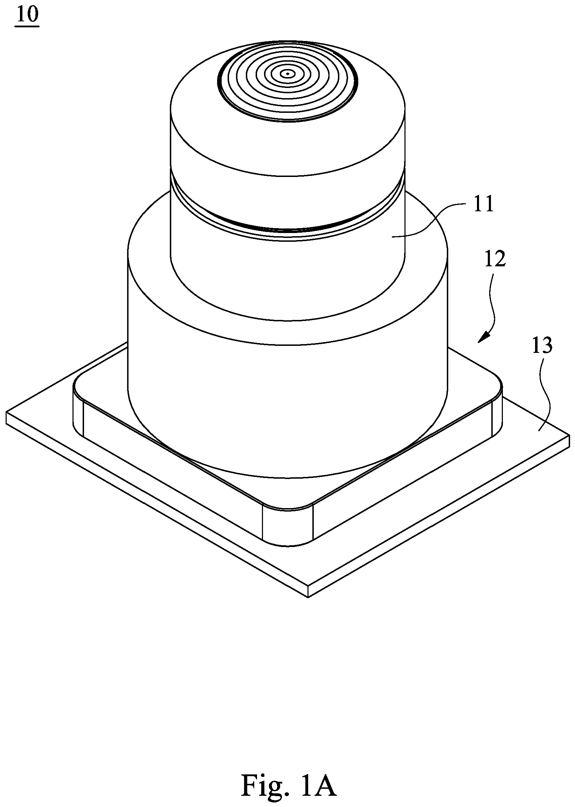

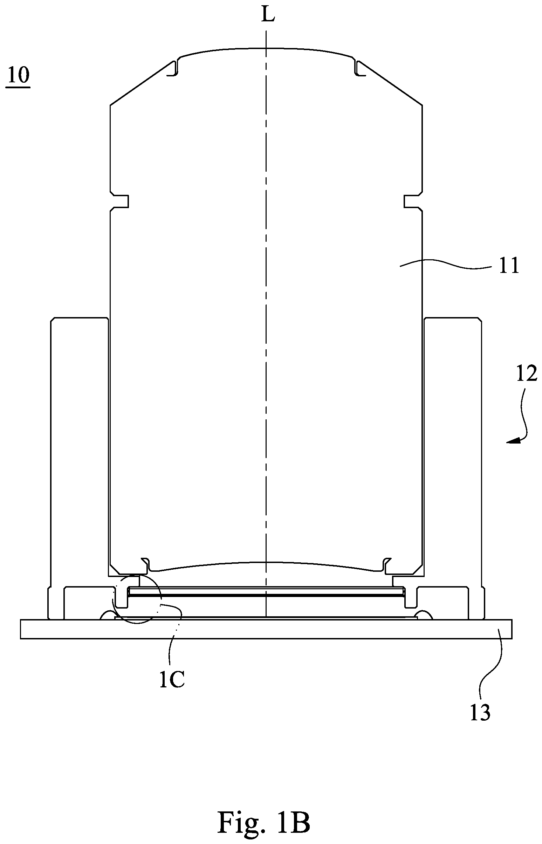

Fig. 1A is a schematic view of a camera module 10 according to the 1st embodiment of the present disclosure, and Fig. 1B is a cross-sectional view of the camera module 10 according to the 1st embodiment in Fig. 1A. In Fig. 1A and Fig. 1B, the camera module 10 includes, in order along a light path L, an imaging lens assembly 11, an image sensor module 12, and a carrier board 13, wherein the image sensor module 12 is disposed on an image side of the imaging lens assembly 11, and the image sensor module 12 is disposed on the carrier board 13.

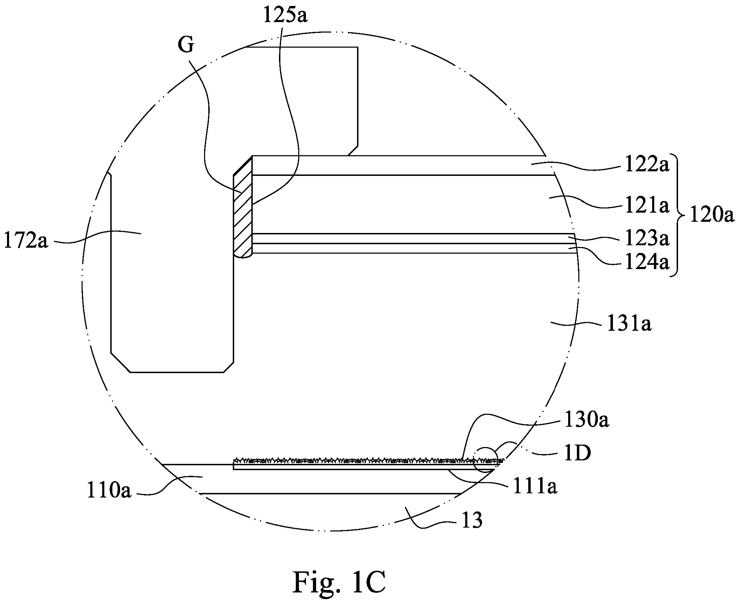

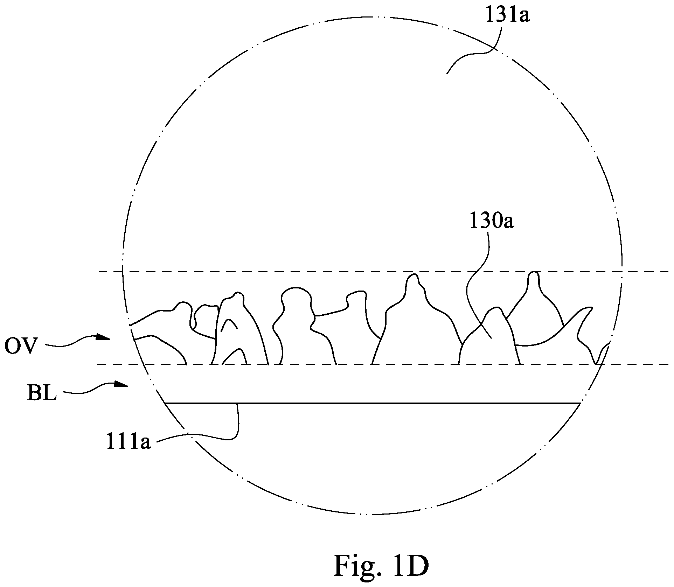

Fig. 1C is a schematic view of an image sensor module 12 according to the 1st example of the 1st embodiment in Fig. 1A, and Fig. 1D is a partial enlarged view of the image sensor module 12 according to the 1st example of the 1st embodiment in Fig. 1C. In Fig. 1C and Fig. 1D, the image sensor module 12 includes a sensing surface 111a, a filter element 120a, an anti-reflective microstructure 130a and an air layer 131a, wherein the filter element 120a faces towards the sensing surface 111a, the anti-reflective microstructure 130a is adjacent to the air layer 131a, and the anti-reflective microstructure 130a partially overlaps with the air layer 131a in a direction perpendicular to the sensing surface 111a.

The filter element 120a includes a substrate 121a, an optical deposition layer structure 122a, and an optical coating layer 123a, wherein the optical deposition layer structure 122a is disposed on one side of the substrate 121a away from the sensing surface 111a, the optical coating layer 123a is disposed corresponding to the optical deposition layer structure 122a and on one side of the substrate 121a facing towards the sensing surface 111a, and the air layer 131a is formed between the optical coating layer 123a and the sensing surface 111a. In detail, the optical deposition layer structure 122a is multilayered, a layer number of the optical deposition layer structure 122a is more than 10, a layer number of the optical coating layer 123a includes one, and a thickness of the optical coating layer 123a is between 900 nm to 5 $\mu$m.

Specifically, it is favorable for avoiding a thermal effect on a lifetime of the optical coating layer 123a via the air layer 131a. There are light-collecting arrays on the sensing surface 111a in order to improve a light-collecting efficiency of the image sensor module 12, and the anti-reflective microstructure 130a can be disposed on a surface of the light-collecting arrays on the sensing surface 111a.

The image sensor module 12 can further include an image sensor 110a, wherein the image sensor 110a can form the sensing surface 111a, and the sensing surface 111a can be for collecting lights passing through the filter element 120a.

The substrate 121a can include a side surface 125a, wherein the side surface 125a can extend along a direction of a thickness of the substrate 121a, and the optical coating layer 123a is not disposed on the side surface 125a. Therefore, it is favorable for avoiding a non-uniform of the optical coating layer 123a so as to ensure the optical quality.

The image sensor module 12 can further include a filter element holder 172a, and the filter element holder 172a can at least partially overlap with a projection of the anti-reflective microstructure 130a parallel to the sensing surface 111a, wherein the imaging lens assembly 11 and the filter element 120a can be disposed on the filter element holder 172a. Particularly, the anti-reflective microstructure 130a can further partially overlap with the filter element 120a, which is favorable for preventing a flare caused by a reflection from an inner structure so as to improve the optical quality.

The filter element 120a can further include an isolation layer 124a, wherein the isolation layer 124a can be disposed between the optical coating layer 123a and the anti-reflective microstructure 130a, and the isolation layer 124a can be a multilayered film. Therefore, it is favorable for improving an adhesion of the anti-reflective microstructure 130a and a chemical-stability of the optical coating layer 123a so as to ensure a yield.

Furthermore, a portion where the anti-reflective microstructure 130a partially overlaps with the air layer 131a in a direction perpendicular to the sensing surface 111a can be defined as an overlapping area OV, and the overlapping area OV allows lights to gradually enter the sensing surface 111a so as to improve the transmittance, wherein a thickness of the overlapping area OV can be 50 nm to 500 nm, and the thickness of the overlapping area OV can further be 75 nm to 250 nm.

A side surface 125a of the filter element 120a can be adhered to the filter element holder 172a via a glue G. Where the anti-reflective microstructure 130a overlaps with the air layer 131a in a direction perpendicular to the sensing surface 111a is in the overlapping area OV. Furthermore, the anti-reflective microstructure 130a can further include a base layer BL, and the base layer BL is disposed between the overlapping area OV and the sensing surface 111a.

The substrate 121a can be a red-light absorbing glass. It is favorable for matching sensing characteristics of the image sensor 110a via adsorbing the red light by the red-light absorbing glass so as to improve the optical quality. Particularly, the red-light absorbing glass appears blue or blue-green through absorbing the red light, wherein the red-light absorbing glass can be a blue glass, but the present disclosure is not limited thereto.

The optical coating layer 123a can be an organic material layer. Therefore, it is favorable for reducing a thermal deterioration of the optical deposition layer structure 122a during a process of forming the optical coating layer 123a so as to improve a lifetime of the filter element 120a. In detail, the process of forming the optical coating layer 123a can be spin-coating, photo-curing, heat-curing and so on, but the present disclosure is not limited thereto.

The layer number of the optical deposition layer structure 122a can be further more than or equal to 36, and can be further more than or equal to 72, wherein the optical deposition layer structure 122a with high layer number can be a superposition of multiple coatings, but the present disclosure is not limited thereto. Moreover, different reflectances can be provided by arranging layers with different compositions adjacent to the optical deposition layer structure 122a.

Table 1 shows layer numerals, refractive indice and thicknesses of the optical deposition layer structure 122a according to the 1st example of the 1st embodiment. In Table 1, the optical deposition layer structure 122a includes a first group of the optical deposition layer structure and a second group of the optical deposition layer structure, wherein the layer number of the first group of the optical deposition layer structure is 34, the layer number of the second group of the optical deposition layer structure is 36, and in Table 1, H and L represent high refractive index and low refractive index, respectively. Hence, it is favorable for a higher reflectance of a light with specific wavelength via stacking up high refractive index and low refractive index, alternately, so as to achieve light filtering effect.

| Table 1 | | | | | | | |
|---|---|---|---|---|---|---|---|
| Group | Layer | Refractive index | Thickness (nm) | Group | Layer | Refractive index | Thickness (nm) |
| 1 | 1 | H | 2 | 2 | 35 | H | 4 |
| | 2 | L | 253 | | 36 | L | 35 |
| | 3 | H | 3 | | 37 | H | 91 |
| | 4 | L | 63 | | 38 | L | 158 |
| | 5 | H | 0.5 | | 39 | H | 92 |
| | 6 | L | 214 | | 40 | L | 153 |
| | 7 | H | 17 | | 41 | H | 99 |
| | 8 | L | 38 | | 42 | L | 32 |
| | 9 | H | 83 | | 43 | H | 19 |
| | 10 | L | 6 | | 44 | L | 36 |
| | 11 | H | 38 | | 45 | H | 107 |

(continued)

| Group | Layer | Refractive index | Thickness (nm) | Group | Layer | Refractive index | Thickness (nm) |
|---|---|---|---|---|---|---|---|
| | 12 | L | 194 | | 46 | L | 36 |
| | 13 | H | 118 | | 47 | H | 17 |
| | 14 | L | 193 | | 48 | L | 41 |
| | 15 | H | 119 | | 49 | H | 108 |
| | 16 | L | 193 | | 50 | L | 34 |
| | 17 | H | 119 | | 51 | H | 17 |
| | 18 | L | 196 | | 52 | L | 35 |
| | 19 | H | 120 | | 53 | H | 110 |
| | 20 | L | 193 | | 54 | L | 28 |
| | 21 | H | 118 | | 55 | H | 19 |
| | 22 | L | 194 | | 56 | L | 24 |
| | 23 | H | 117 | | 57 | H | 110 |
| | 24 | L | 186 | | 58 | L | 35 |
| | 25 | H | 106 | | 59 | H | 20 |
| | 26 | L | 165 | | 60 | L | 28 |
| | 27 | H | 100 | | 61 | H | 109 |
| | 28 | L | 167 | | 62 | L | 37 |
| | 29 | H | 92 | | 63 | H | 22 |
| | 30 | L | 156 | | 64 | L | 26 |
| | 31 | H | 93 | | 65 | H | 103 |
| | 32 | L | 150 | | 66 | L | 39 |
| | 33 | H | 96 | | 67 | H | 21 |
| | 34 | L | 108 | | 68 | L | 30 |
| | | | | | 69 | H | 88 |
| | | | | | 70 | L | 78 |

Table 1

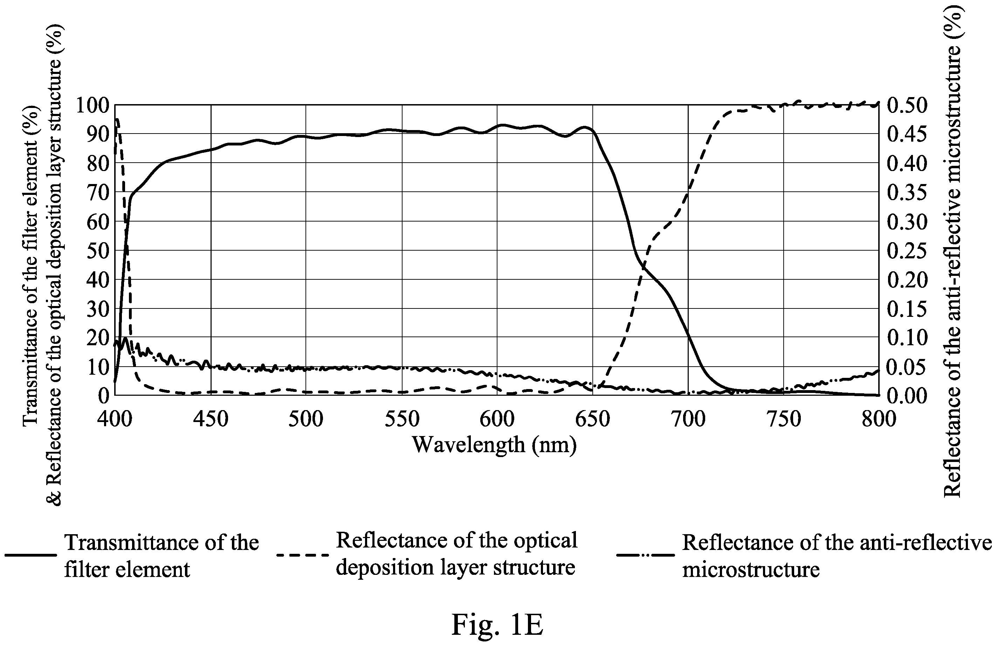

Fig. 1E is a data diagram of the image sensor module 12 according to the 1st example of the 1st embodiment in Fig. 1C. In Fig. 1E, a first wavelength greater than 550 nm that provides a transmittance of the filter element 120a being 50% is T50, a second wavelength less than 450 nm that provides the transmittance of the filter element 120a being 50% is T50-B, a wavelength greater than 550 nm that provides a reflectance of the optical deposition layer structure 122a being 50% is R50, a maximum reflectance is RA, wherein RA[450,T50] is corresponding to a wavelength range of 450 nm to the first wavelength, RA[T50-B,T50] is corresponding to a wavelength range of the second wavelength to the first wavelength, RA[400,800] is corresponding to a wavelength range of 400 nm to 800 nm, and the mentioned parameters satisfy the following conditions in Table 2.

| Table 2 | | | |
|---|---|---|---|
| T50 (nm) | 673 | RA[T50-B,T50] (%) | 0.10 |
| T50-B (nm) | 405.7 | RA[400,800] (%) | 0.10 |
| R50 (nm) | 679.6 | R50-T50 (nm) | 6.6 |
| RA[450,T50] (%) | 0.05 | | |

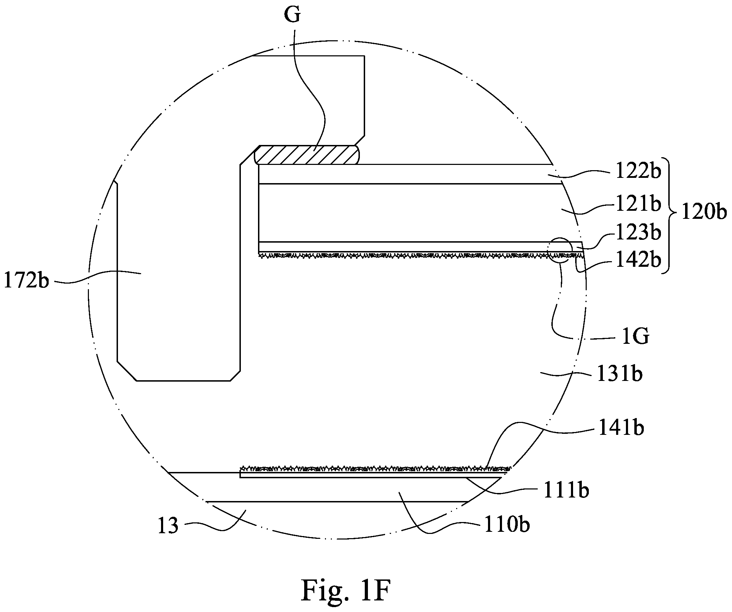

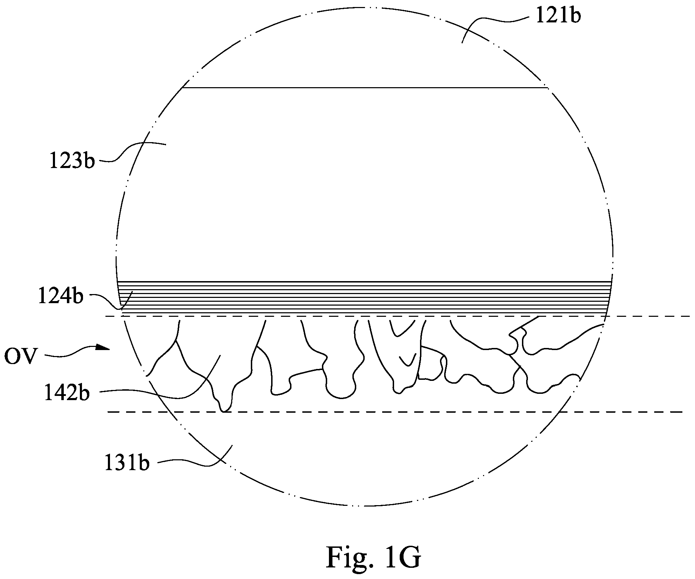

Fig. 1F is a schematic view of an image sensor module 12 according to the 2nd example of the 1st embodiment in Fig. 1A, and Fig. 1G is a partial enlarged view of the image sensor module 12 according to the 2nd example of the 1st embodiment in Fig. 1F. In Fig. 1F and Fig. 1G, the image sensor module 12 includes a sensing surface 111b, a filter element 120b and a first anti-reflective microstructure 141b, and the filter element 120b faces towards the sensing surface 111b, an air layer 131b is formed between the first anti-reflective microstructure 141b and the filter element 120b, and the first anti-reflective microstructure 141b partially overlaps with the air layer 131b in a direction perpendicular to the sensing surface 111b.

The filter element 120b includes a substrate 121b, an optical deposition layer structure 122b, and an optical coating layer 123b, wherein the optical deposition layer structure 122b is disposed on one side of the substrate 121b away from the sensing surface 111b, the optical coating layer 123b is disposed corresponding to the optical deposition layer structure 122b and on one side of the substrate 121b facing towards the sensing surface 111b, and the first anti-reflective microstructure 141b is disposed on the sensing surface 111b. In detail, the optical deposition layer structure 122b is multilayered, a layer number of the optical deposition layer structure 122b is more than 10, a layer number of the optical coating layer 123b includes one, and a thickness of the optical coating layer 123b is between 900 nm to 5 $\mu$m.

The image sensor module 12 can further include an image sensor 110b, wherein the image sensor 110b can form the sensing surface 111b, and the sensing surface 111b can be for collecting lights passing through the filter element 120b.

The image sensor module 12 can further include a filter element holder 172b, wherein the filter element holder 172b can support the filter element 120b, and one side of the filter element 120b away from the sensing surface 111b is adhered to the filter element holder 172b via a glue G.

The filter element 120b can further include an isolation layer 124b and a second anti-reflective microstructure 142b, wherein the second anti-reflective microstructure 142b can be disposed on one side of the optical coating layer 123b away from the optical deposition layer structure 122b, and partially overlap with the air layer 131b in the direction perpendicular to the sensing surface 111b. Furthermore, the isolation layer 124b can be disposed between the optical coating layer 123b and the second anti-reflective microstructure 142b, and the isolation layer 124b can be a multilayered film.

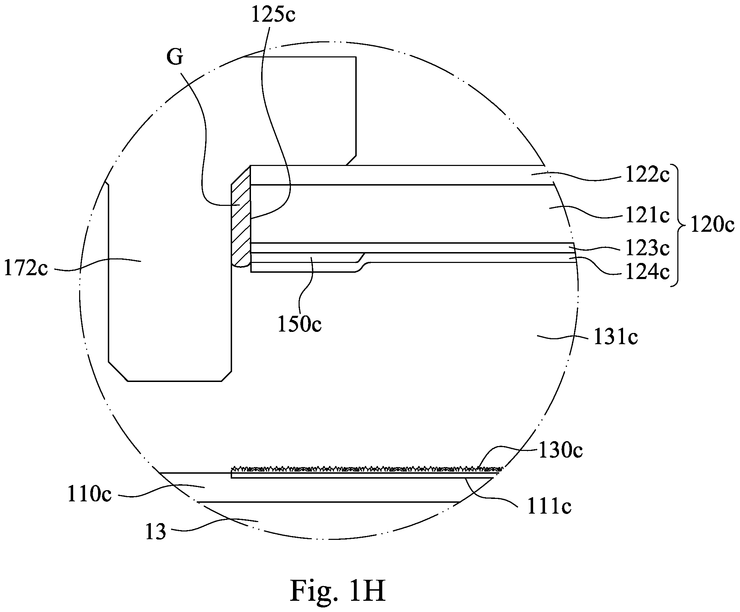

Fig. 1H is a schematic view of an image sensor module 12 according to the 3rd example of the 1st embodiment in Fig. 1A. In Fig. 1H, the image sensor module 12 includes a sensing surface 111c, a filter element 120c, an anti-reflective microstructure 130c and an air layer 131c, wherein the filter element 120c faces towards the sensing surface 111c, the anti-reflective microstructure 130c is adjacent to the air layer 131c, and the anti-reflective microstructure 130c partially overlaps with the air layer 131c in a direction perpendicular to the sensing surface 111c.

The filter element 120c includes a substrate 121c, an optical deposition layer structure 122c, and an optical coating layer 123c, wherein the optical deposition layer structure 122c is disposed on one side of the substrate 121c away from the sensing surface 111c, the optical coating layer 123c is disposed corresponding to the optical deposition layer structure 122c and on one side of the substrate 121c facing towards the sensing surface 111c, and the air layer 131c is formed between the optical coating layer 123c and the sensing surface 111c. In detail, the optical deposition layer structure 122c is multilayered, and a layer number of the optical deposition layer structure 122c is more than 10, a layer number of the optical coating layer 123c includes one, and a thickness of the optical coating layer 123c is between 900 nm to 5 $\mu$m.

The image sensor module 12 can further include an image sensor 110c, wherein the image sensor 110c can form the sensing surface 111c, and the sensing surface 111c can be for collecting lights passing through the filter element 120c.

The image sensor module 12 can further include a filter element holder 172c, and the filter element holder 172c can at least partially overlap with a projection of the anti-reflective microstructure 130c parallel to the sensing surface 111c, and a side surface 125c of the filter element 120c can be adhered to the filter element holder 172c via a glue G. Particularly, the anti-reflective microstructure 130c can further partially overlap with the filter element 120c, which is favorable for preventing a flare caused by a reflection from an inner structure so as to improve the optical quality.

The filter element 120c can further include an isolation layer 124c, wherein the isolation layer 124c can be disposed between the optical coating layer 123c and the anti-reflective microstructure 130c, and the isolation layer 124c can be a multilayered film.

The image sensor module 12 can further include a light blocking layer 150c, wherein the light blocking layer 150c can be disposed between the optical coating layer 123c and the isolation layer 124c. Therefore, it is favorable for avoiding a flare caused by a reflection from a surface of the light blocking layer 150c so as to improve the optical quality.

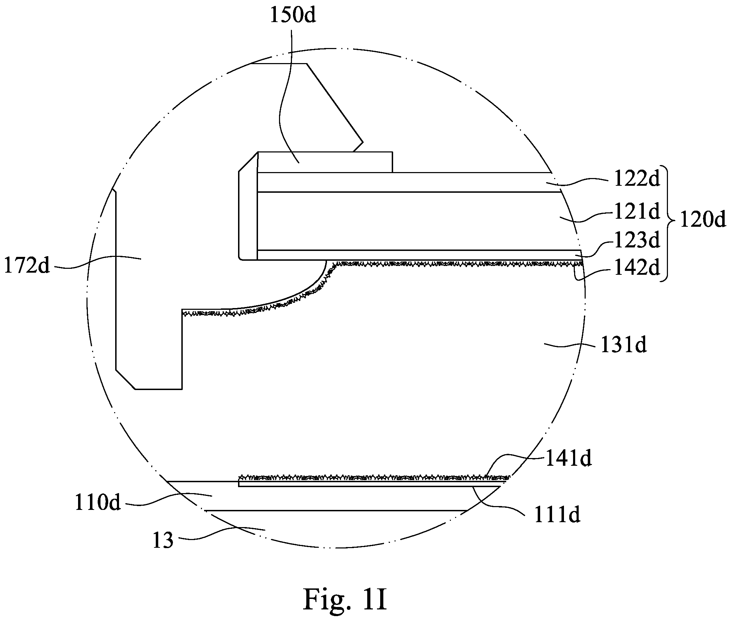

Fig. 1I is a schematic view of an image sensor module 12 according to the 4th example of the 1st embodiment in Fig. 1A. In Fig. 1I, the image sensor module 12 includes a sensing surface 111d, a filter element 120d and a first anti-reflective microstructure 141d, wherein the filter element 120d faces towards the sensing surface 111d, the first anti-reflective microstructure 141d is disposed on the sensing surface 111d, an air layer 131d is formed between the first anti-reflective microstructure 141d and the filter element 120d, and the first anti-reflective microstructure 141d partially overlaps with the air layer 131d in a direction perpendicular to the sensing surface 111d.

The filter element 120d includes a substrate 121d, an optical deposition layer structure 122d, and an optical coating layer 123d, wherein the optical deposition layer structure 122d is disposed on one side of the substrate 121d away from the sensing surface 111d, the optical coating layer 123d is disposed corresponding to the optical deposition layer structure 122d and on one side of the substrate 121d facing towards the sensing surface 111d. In detail, the optical deposition layer structure 122d is multilayered, a layer number of the optical deposition layer structure 122d is more than 10, a layer number of the optical coating layer 123d includes one, and a thickness of the optical coating layer 123d is between 900 nm to 5 μm.

The image sensor module 12 can further include an image sensor 110d, wherein the image sensor 110d can form the sensing surface 111d, and the sensing surface 111d can be for collecting lights passing through the filter element 120d.

The image sensor module 12 can further include a filter element holder 172d, wherein the filter element holder 172d can support the filter element 120d, and the filter element holder 172d and the filter element 120d can be integrated via a hot-pressing process.

The filter element 120d can further include a second anti-reflective microstructure 142d, wherein the second anti-reflective microstructure 142d can be disposed on one side of the optical coating layer 123d away from the optical deposition layer structure 122d, and partially overlap with the air layer 131d in the direction perpendicular to the sensing surface 111d. Therefore, it is favorable for reducing a reflection from one side of the filter element 120d facing the sensing surface 111d to further improve the transmittance.

In detail, anti-reflective microstructures (that is, the first anti-reflective microstructure 141d and the second anti-reflective microstructure 142d) are disposed on both of the sensing surface 111d and the filter element 120d, and the second anti-reflective microstructure 142d is further disposed on at least one portion of the filter element holder 172d.

The image sensor module 12 can further include a light blocking layer 150d, wherein the light blocking layer 150d is disposed on one side of the optical deposition layer structure 122d away from the optical coating layer 123d.

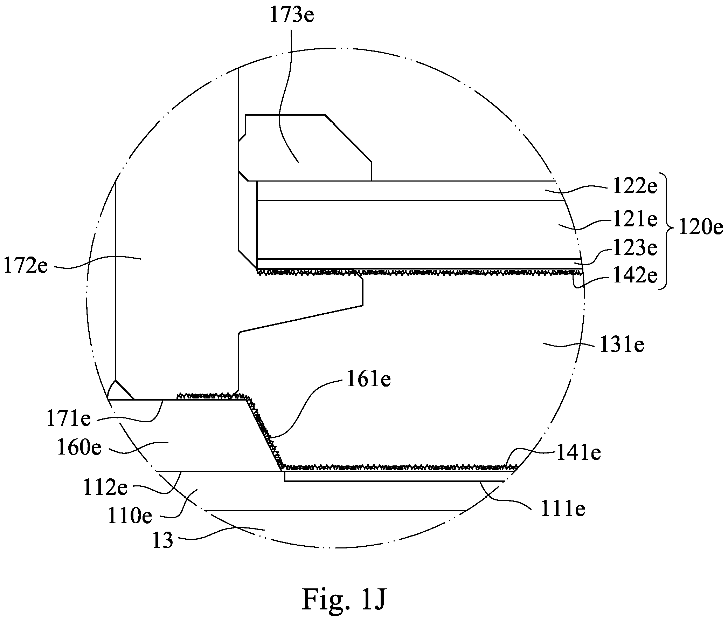

Fig. 1J is a schematic view of an image sensor module 12 according to the 5th example of the 1st embodiment in Fig. 1A. In Fig. 1J, the image sensor module 12 includes a sensing surface 111e, a filter element 120e and a first anti-reflective microstructure 141e, wherein the filter element 120e faces towards the sensing surface 111e, the first anti-reflective microstructure 141e is disposed on the sensing surface 111e, an air layer 131e is formed between the first anti-reflective microstructure 141e and the filter element 120e, and the first anti-reflective microstructure 141e partially overlaps with the air layer 131e in a direction perpendicular to the sensing surface 111e.

The filter element 120e includes a substrate 121e, an optical deposition layer structure 122e, and an optical coating layer 123e, wherein the optical deposition layer structure 122e is disposed on one side of the substrate 121e away from the sensing surface 111e, the optical coating layer 123e is disposed corresponding to the optical deposition layer structure 122e and on one side of the substrate 121e facing towards the sensing surface 111e. In detail, the optical deposition layer structure 122e is multilayered, a layer number of the optical deposition layer structure 122e is more than 10, a layer number of the optical coating layer 123e includes one, and a thickness of the optical coating layer 123e is between 900 nm to 5 μm.

The image sensor module 12 can further include an image sensor 110e and a molded body 160e. The image sensor 110e can form the sensing surface 111e and a non-sensing surface 112e, wherein the non-sensing surface 112e can be adjacent to a periphery of the sensing surface 111e. The molded body 160e can be formed on the image sensor 110e, the molded body 160e can include an inner lateral surface 161e, and the inner lateral surface 161e can face towards a center of the sensing surface 111e. Wherein the inner lateral surface 161e can extend from the non-sensing surface 112e to a direction away from the sensing surface 111e, and the first anti-reflective microstructure 141e can be disposed on at least one portion of the inner lateral surface 161e. Therefore, it is favorable for reducing a possibility of a flare caused by the molded body 160e. Particularly, the molded body 160e and the image sensor 110e can be integrally molded via insert-molding.

The image sensor module 12 can further include an installing position 171e, a filter element holder 172e and a retainer 173e, wherein the filter element holder 172e can be disposed on the installing position 171e, the filter element holder 172e can support the filter element 120e, the first anti-reflective microstructure 141e can be disposed on at least one portion of the installing position 171e, and the retainer 173e can fix the filter element 120e to the filter element holder 172e. It is favorable for preventing a flare caused by a reflection from an inner structure via the first anti-reflective microstructure 141e further extending to the installing position 171e so as to improve the optical quality.

The filter element 120e can further include a second anti-reflective microstructure 142e, wherein the second anti-reflective microstructure 142e can be disposed on one side of the optical coating layer 123e away from the optical deposition layer structure 122e, and partially overlap with the air layer 131e in the direction perpendicular to the sensing surface 111e. Furthermore, the second anti-reflective microstructure 142e can partially overlap with a projection of the filter element holder 172e parallel to the sensing surface 111e.

In detail, anti-reflective microstructures (that is, the first anti-reflective microstructure 141e and the second anti-reflective microstructure 142e) are disposed on both of the sensing surface 111e and the filter element 120e, the second anti-reflective microstructure 142e is further disposed on at least one portion of the filter element holder 172e, and the molded body 160e can further form the installing position 171e.

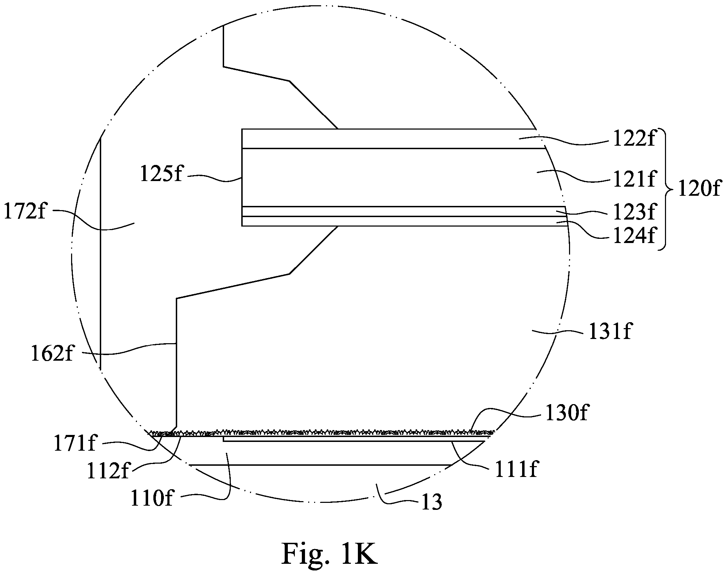

Fig. 1K is a schematic view of an image sensor module 12 according to the 6th example of the 1st embodiment in Fig. 1A. In Fig. 1K, the image sensor module 12 includes a sensing surface 111f, a filter element 120f, an anti-reflective microstructure 130f, and an air layer 131f, wherein the filter element 120f faces towards the sensing surface 111f, the anti-reflective microstructure 130f is adjacent to the air layer 131f, and the anti-reflective microstructure 130f partially overlaps with the air layer 131f in a direction perpendicular to the sensing surface 111f.

The filter element 120f includes a substrate 121f, an optical deposition layer structure 122f, and an optical coating layer 123f, wherein the optical deposition layer structure 122f is disposed on one side of the substrate 121f away from the sensing surface 111f, the optical coating layer 123f is disposed corresponding to the optical deposition layer structure 122f and on one side of the substrate 121f facing towards the sensing surface 111f, and the air layer 131f is formed between the optical coating layer 123f and the sensing surface 111f. In detail, the optical deposition layer structure 122f is multilayered, and a layer number of the optical deposition layer structure 122f is more than 10, a layer number of the optical coating layer 123f includes one, and a thickness of the optical coating layer 123f is between 900 nm to 5 $\mu$m.

The image sensor module 12 can further include an image sensor 110f and a molded set 162f, wherein the image sensor 110f can form the sensing surface 111f and a non-sensing surface 112f, and the molded set 162f can directly contact the non-sensing surface 112f. The sensing surface 111f can be for collecting lights passing through the filter element 120f, the non-sensing surface 112f can be adjacent to a periphery of the sensing surface 111f, and the anti-reflective microstructure 130f can be disposed on the non-sensing surface 112f. Therefore, it is favorable for reducing impacts of structure defects on the edge of the anti-reflective microstructure 130f on the optical quality so as to ensure the optical quality of the periphery of the sensing surface 111f. Particularly, the non-sensing surface 112f can include a plurality of connecting pads and the non-sensing surface 112f can electrically connect to a circuit by the connecting pads.

The substrate 121f can include a side surface 125f, wherein the side surface 125f can extend along the optical deposition layer structure 122f to the optical coating layer 123f, and the optical coating layer 123f is not disposed on the side surface 125f.

The image sensor module 12 can further include an installing position 171f and a filter element holder 172f, wherein the filter element holder 172f can be disposed on the installing position 171f, the filter element holder 172f can support the filter element 120f, the anti-reflective microstructure 130f can be disposed on at least one portion of the installing position 171f, and the filter element holder 172f can at least partially overlap with a projection of the anti-reflective microstructure 130f parallel to the sensing surface 111f. Moreover, the non-sensing surface 112f can include the installing position 171f, and the filter element holder 172f and the filter element 120f can be integrally molded via insert-molding.

The filter element 120f can further include an isolation layer 124f, wherein the isolation layer 124f can be disposed between the optical coating layer 123f and the anti-reflective microstructure 130f, and the isolation layer 124f can be a multilayered film.

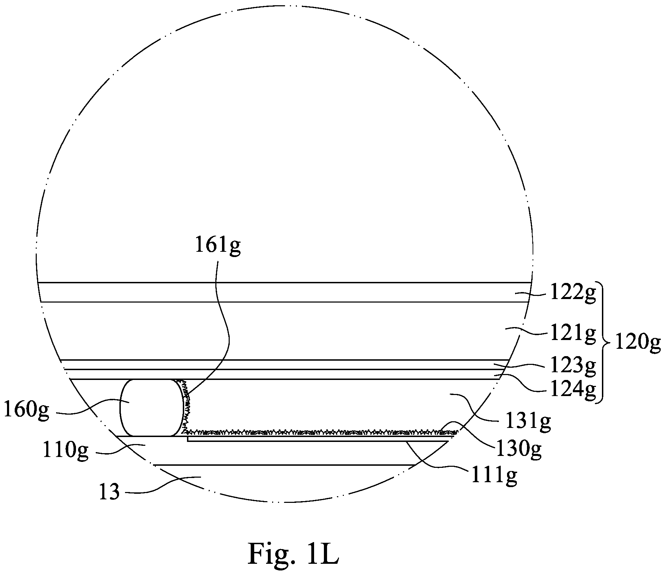

Fig. 1L is a schematic view of an image sensor module 12 according to the 7th example of the 1st embodiment in Fig. 1A. In Fig. 1L, the image sensor module 12 includes a sensing surface 111g, a filter element 120g, an anti-reflective microstructure 130g and an air layer 131g, wherein the filter element 120g faces towards the sensing surface 111g, the anti-reflective microstructure 130g is adjacent to the air layer 131g, and the anti-reflective microstructure 130g partially overlaps with the air layer 131g in a direction perpendicular to the sensing surface 111g.

The filter element 120g includes a substrate 121g, an optical deposition layer structure 122g, and an optical coating layer 123g, wherein the optical deposition layer structure 122g is disposed on one side of the substrate 121g away from the sensing surface 111g, the optical coating layer 123g is disposed corresponding to the optical deposition layer structure 122g and on one side of the substrate 121g facing towards the sensing surface 111g, and the air layer 131g is formed between the optical coating layer 123g and the sensing surface 111g. In detail, the optical deposition layer structure 122g is multilayered, and a layer number of the optical deposition layer structure 122g is more than 10, a layer number of the optical coating layer 123g includes one, and a thickness of the optical coating layer 123g is between 900 nm to 5 $\mu$m.

The image sensor module 12 can further include an image sensor 110g and a molded body 160g, wherein the image sensor 110g can form the sensing surface 111g, and the molded body 160g can be formed on the image sensor 110g. The molded body 160g can include an inner lateral surface 161g, and the inner lateral surface 161g can face towards a center of the sensing surface 111g, wherein the anti-reflective microstructure 130g can be disposed on both of the sensing surface 111g and the inner lateral surface 161g. The filter element 120g can be in contact with the molded body 160g via the anti-reflective microstructure 130g disposed on the sensing surface 111g and the inner lateral surface 161g so as to seal the sensing surface 111g. Furthermore, the molded body 160g can be formed and solidified from a glue, but the present disclosure is not limited thereto.

The filter element 120g can further include an isolation layer 124g, wherein the isolation layer 124g can be disposed between the optical coating layer 123g and the anti-reflective microstructure 130g, and the isolation layer 124g can be a multilayered film.

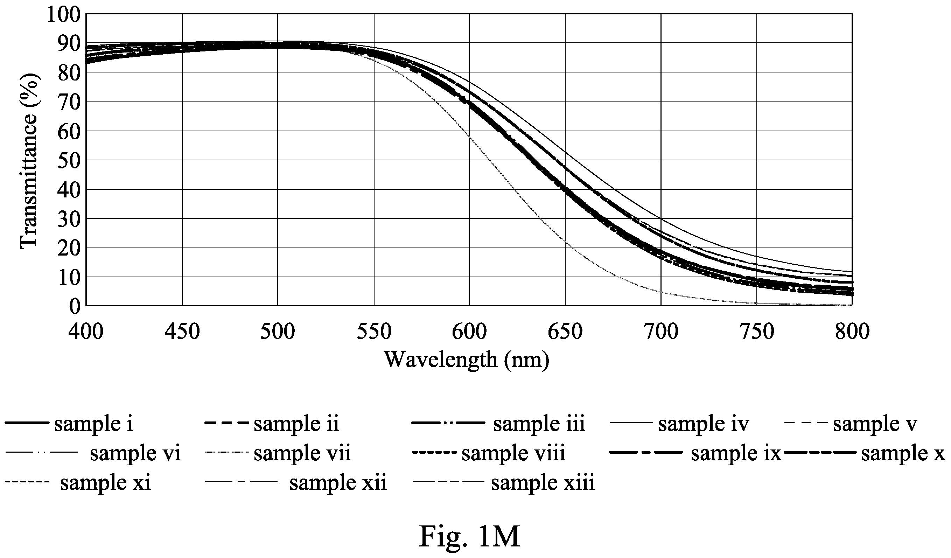

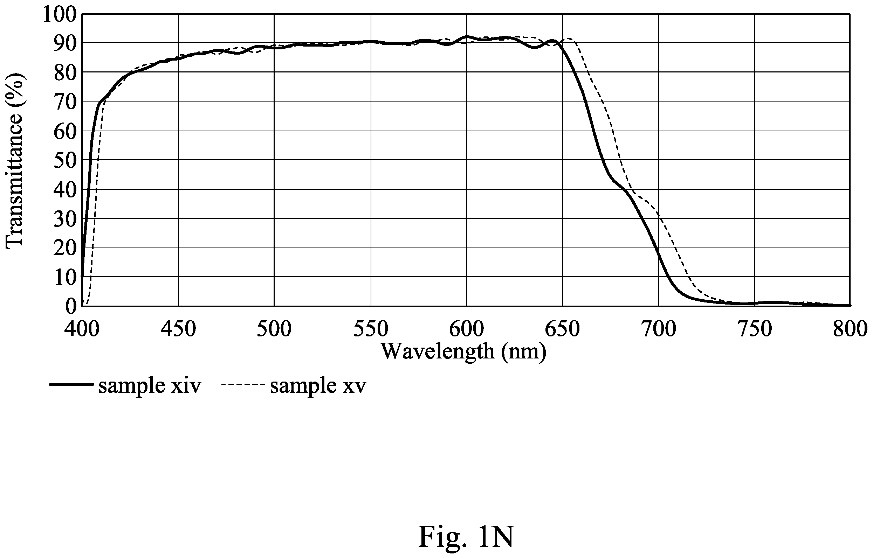

Fig. 1M is a transmittance diagram of a filter element according to the 1st embodiment in Fig. 1A, and Fig. 1N is another transmittance diagram of the filter element according to the 1st embodiment in Fig. 1A. In Fig. 1M and Fig. 1N, a transmittance of the filter element in a wavelength range of 450 nm to 550 nm is Tmin450-550, a first wavelength greater than 550 nm that provides the transmittance of the filter element being 50% is T50, a second wavelength less than 450 nm that provides the transmittance of the filter element being 50% is T50-B, a maximum value of the transmittance of the filter element in the wavelength range of 450 nm to 550 nm is Tmax, and the mentioned parameters satisfy the following conditions in Table 3. It is to be noted that sample i to sample xv can be applied to the 1st example of the 1st embodiment to the 7th example of the 1st embodiment.

| Table 3 | | | | | |
|---|---|---|---|---|---|
| | sample i | sample ii | sample iii | sample iv | sample v |
| Tmin450-550 (%) | 86.3 | 86.0 | 86.2 | 88.5 | 86.1 |
| T50 (nm) | 633.0 | 633.3 | 633.4 | 655.7 | 633.1 |
| T50-B (nm) | N/A | N/A | N/A | N/A | N/A |
| Tmax (%) | 89.4 | 88.9 | 89.6 | 90.6 | 89.2 |
| | sample vi | sample vii | sample viii | sample ix | sample x |
| Tmin450-550 (%) | 86.7 | 84.1 | 86.4 | 85.6 | 87.1 |
| T50 (nm) | 632.1 | 610.4 | 632.4 | 633.1 | 644.4 |
| T50-B (nm) | N/A | N/A | N/A | N/A | N/A |
| Tmax (%) | 90.1 | 89.2 | 89.5 | 88.7 | 89.8 |
| | sample xi | sample xii | sample xiii | sample xiv | sample xv |
| Tmin450-550 (%) | 86.9 | 87.0 | 87.1 | 84.6 | 85.4 |
| T50 (nm) | 643.5 | 645.1 | 644.5 | 670.9 | 680.0 |
| T50-B (nm) | N/A | N/A | N/A | 404.4 | 408.2 |
| Tmax (%) | 89.6 | 89.7 | 89.9 | 92.0 | 92.0 |

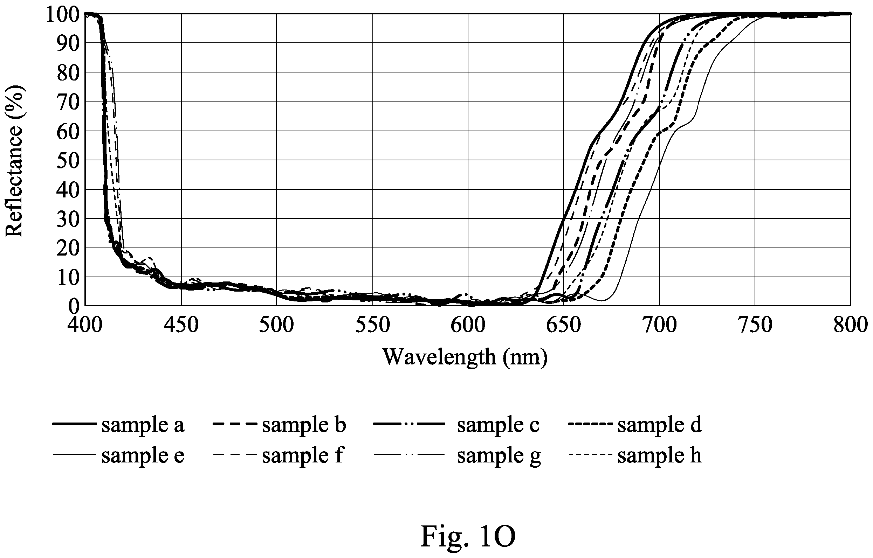

Fig. 1O is a reflectance diagram of an optical deposition layer structure according to the 1st embodiment in Fig. 1A. In Fig. 1O, a wavelength greater than 550 nm that provides the reflectance of the optical deposition layer structure being 50% is R50, and the mentioned parameters satisfy the following conditions in Table 4. It is to be noted that sample a to sample h can be applied to the 1st example of the 1st embodiment to the 7th example of the 1st embodiment.

| Table 4 | | | | |
|---|---|---|---|---|
| | sample a | sample b | sample c | sample d |
| R50 (nm) | 661.8 | 670.2 | 681.5 | 692.0 |
| | sample e | sample f | sample g | sample h |
| R50 (nm) | 701.1 | 664.1 | 672.2 | 682.8 |

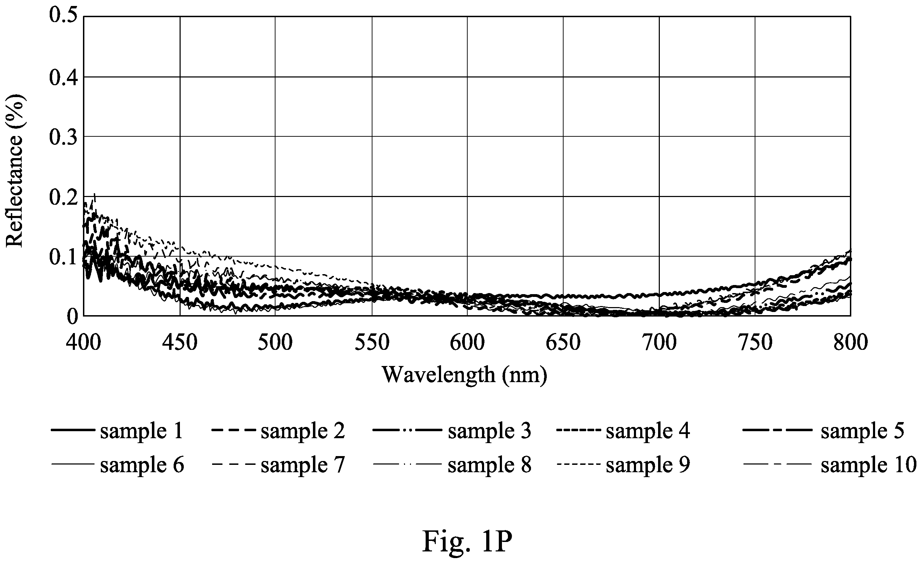

Fig. 1P is a reflectance diagram of an anti-reflective microstructure according to the 1st embodiment in Fig. 1A. In Fig. 1P, a maximum reflectance of the anti-reflective microstructure in a wavelength range of 400 nm to 800 nm is Rmax, and the mentioned parameters satisfy the following conditions in Table 5. It is to be noted that sample 1 to sample 10 can be applied to the 1st example of the 1st embodiment to the 7th example of the 1st embodiment.

| Table 5 | | | | | |
|---|---|---|---|---|---|
| | sample 1 | sample 2 | sample 3 | sample 4 | sample 5 |
| Rmax (%) | 0.13 | 0.14 | 0.09 | 0.10 | 0.17 |
| | sample 6 | sample 7 | sample 8 | sample 9 | sample 10 |
| Rmax (%) | 0.12 | 0.20 | 0.12 | 0.19 | 0.11 |

In order to show the relative positions among elements, the light blocking layer, the optical coating layer, and the anti-reflective microstructure are not drawn in an actual scale in Fig. 1C, Fig. 1D, and Fig. 1F to Fig. 1L.

<2nd embodiment>

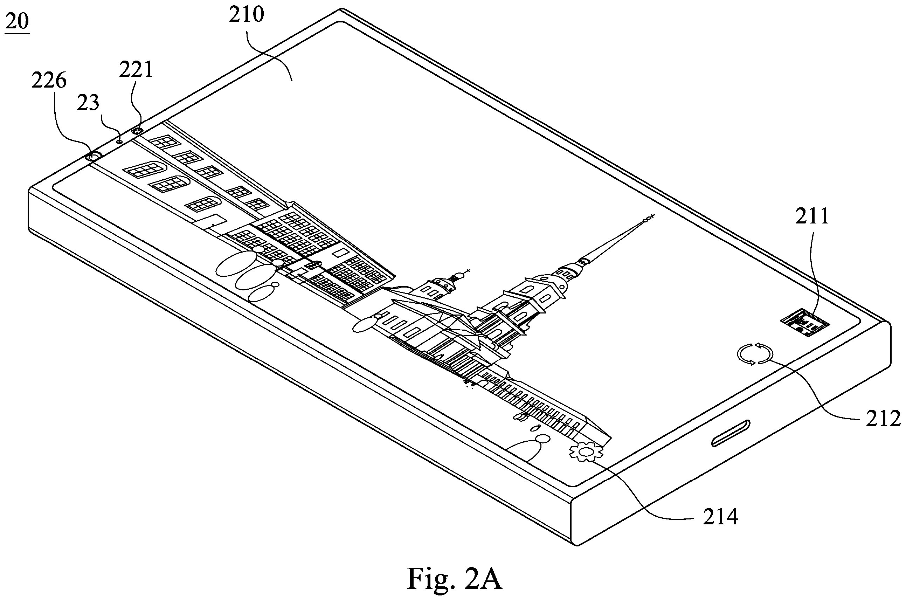

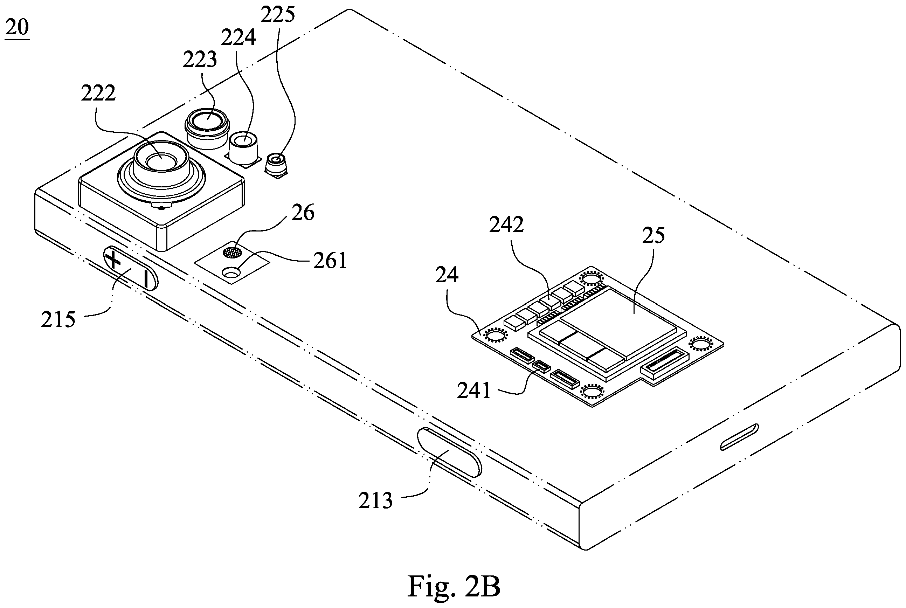

Fig. 2A is a schematic view of an electronic device 20 according to the 2nd embodiment of the present disclosure, and Fig. 2B is another schematic view of the electronic device 20 according to the 2nd embodiment in Fig. 2A. In Fig. 2A and Fig. 2B, the electronic device 20 is a smart phone, wherein the electronic device 20 can also be a laptop, a tablet and a driving recorder, but the present disclosure is not limited thereto. The electronic device 20 includes camera modules and an imaging controlling interface 210, wherein each camera module includes an imaging lens assembly and an image sensor module, and the image sensor module is disposed on an image side of the imaging lens assembly. Furthermore, the image sensor module can be any one of the aforementioned 1st example of the 1st embodiment to the 7th example of the 1st embodiment, but the present disclosure is not limited thereto.

In the 2nd embodiment, the camera modules are a front camera module 221, a wide angle camera module 222, a telephoto camera module 223, an ultra-wide angle camera module 224, a macro-image capturing camera module 225, and TOF (Time-Of-Flight) module 226, wherein the TOF module 226 can be other types of camera modules, but the present disclosure is not limited thereto.

In detail, in the 2nd embodiment, the front camera module 221 and the TOF module 226 are disposed on a front of the electronic device 20, and the wide angle camera module 222, the telephoto camera module 223, the ultra-wide angle camera module 224 and the macro-image capturing camera module 225 are disposed on a back of the electronic device 20.

The imaging controlling interface 210 can be a touch screen for displaying the scene and providing the touch function, and the shooting angle can be manually adjusted. In detail, the imaging controlling interface 210 includes an image replay button 211, a camera module switching button 212, a focus capturing button 213, an integrated menu button 214 and a zoom controlling button 215. Furthermore, users enter a shooting mode via the imaging controlling interface 210 of the electronic device 20, the camera module switching button 212 can be flexibly configured to switch one of the front camera module 221, the wide angle camera module 222, the telephoto camera module 223, the ultra-wide angle camera module 224 and the macro-image capturing camera module 225 to capture the image, the zoom controlling button 215 is configured to adjust the zoom, the users use the focus capturing button 213 to undergo image capturing after capturing the images and confirming one of the front camera module 221, the wide angle camera module 222, the telephoto camera module 223, the ultra-wide angle camera module 224 and the macro-image capturing camera module 225, the users can view the images by the image replay button 211 after undergoing image capturing, and the integrated menu button 214 is configured to adjust the details of the image capturing (such as timed photo, photo ratio, and etc.).

The electronic device 20 can further include a reminding light 23, and the reminding light 23 is disposed on the front of the electronic device 20 which can be configured to remind the users of unread messages, missed calls and the condition of the phone.

Moreover, after entering the shooting mode via the imaging controlling interface 210 of the electronic device 20, the imaging light is gathered on the image sensor via the image capturing apparatus, and an electronic signal about an image is output to an image signal processor (ISP) (not shown) of a single chip system 25. The single chip system 25 can further include a random access memory (RAM) (not shown), a central processing unit (not shown) and a storage unit (not shown). Also, the single chip system 25 can further include, but not be limited to, a display, a controlling unit, a read-only memory (ROM), or the combination thereof.

Further, the electronic device 20 can further include an image software processor and an image signal processor, and further integrates the image software processor, the image signal processor, a position locator, a transmit signal processor, a gyroscope, a storage unit and a random access memory in the single chip system 25.

To meet a specification of the electronic device 20, the electronic device 20 can further include an optical anti-shake mechanism (not shown). Furthermore, the electronic device 20 can further include at least one focusing assisting module 26 and at least one sensing element (not shown). The focusing assisting module 26 can include a flash module 261 for compensating a color temperature, an infrared distance measurement component (not shown), a laser focus module (not shown), etc. The sensing element can have functions for sensing physical momentum and kinetic energy, such as an accelerator, a gyroscope, a Hall Effect Element, a position locator, a signal transmitter module, to sense shaking or jitters applied by hands of the user or external environments. Accordingly, the electronic device 20 equipped with an auto-focusing mechanism and the optical anti-shake mechanism can be enhanced to achieve the superior image quality. Furthermore, the electronic device 20 according to the present disclosure can have a capturing function with multiple modes, such as taking optimized selfies, high dynamic range (HDR) under a low light condition, 4K resolution recording, etc. Furthermore, the users can visually see a captured image of the camera through the imaging controlling interface 210 and manually operate the view finding range on the imaging controlling interface 210 to achieve the autofocus function of what you see is what you get.

Moreover, the camera modules, the optical anti-shake mechanism, the sensing element, the focusing assisting module 26 and an electronic element 242 can be disposed on a circuit board 24 and electrically connected to the associated components via a connector 241 to perform a capturing process, wherein the circuit board 24 can be a flexible printed circuit board (FPC). Since the current electronic devices, such as smart phones, have a tendency of being compact, the way of firstly disposing the image capturing apparatus and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the image capturing apparatus can also be controlled more flexibly via the touch screen of the electronic device. According to the 2nd embodiment, the sensing element and the focusing assisting module 26 are disposed on the circuit board 24 and at least one other flexible printed circuit board (not shown) and electrically connected to the associated components, such as the image signal processor, via corresponding connectors to perform the capturing process. In other embodiments (not shown), the sensing elements and the focusing assisting modules can also be disposed on the main board of the electronic device or carrier boards of other types according to requirements of the mechanical design and the circuit layout.

Moreover, the image of the certain range with the high resolution can be captured via the wide angle camera module 222, and the wide angle camera module 222 has the function of the high resolution and the low deformation. Comparing with the image captured via the wide angle camera module 222, the image captured via the telephoto camera module 223 has narrower visual angle and narrower depth of field. Hence, the telephoto camera module 223 can be configured to capture the moving targets, that is, the telephoto camera module 223 can be driven via an actuator (not shown) of the electronic device 20 to quick and continuous auto focus the moving targets so as to make the image of the moving targets is not fuzzy owing to defocus. Comparing with the image captured via the wide angle camera module 222, the image captured via the ultra-wide angle camera module 224 has wider visual angle and wider depth of field, but the image captured via the ultra-wide angle camera module 224 also has greater distortion.

In particular, the zooming function can be obtained via the electronic device 20, when the scene is captured via the image capturing apparatuses with different focal lengths cooperated with the function of image processing.

<3rd embodiment>

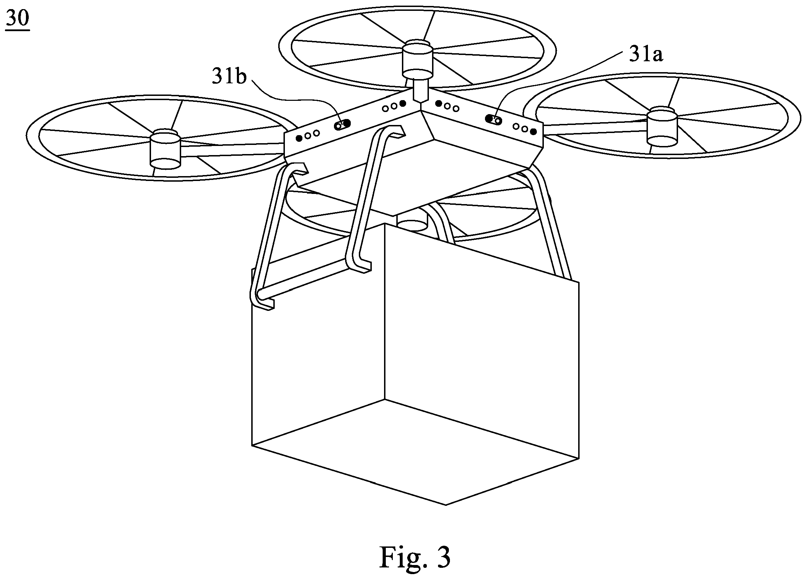

Fig. 3 is a schematic view of an electronic device applied to a drone 30 according to the 3rd embodiment of the present disclosure. In Fig. 3, the electronic device includes camera modules, wherein each camera module includes an imaging lens assembly, and the image sensor module, and the image sensor module is disposed on an image side of the imaging lens assembly. Moreover, the image sensor module can be any one of the aforementioned 1st example of the 1st embodiment to the 7th example of the 1st embodiment, but the present disclosure is not limited thereto.

In the 3rd embodiment, the camera modules are a front camera module 31a and a lateral camera module 31b, respectively.

Specifically, the front camera module 31a is disposed on a front end of the drone 30, and the lateral camera module 31b is disposed on a side of the drone 30. Therefore, the electronic device can be configured to cope with the complicated environmental light.

<4th embodiment>

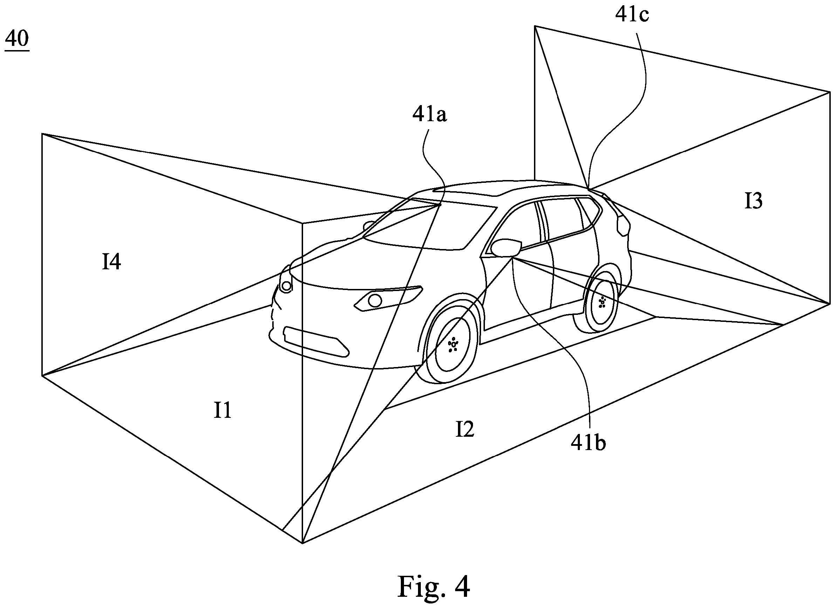

Fig. 4 is a schematic view of an electronic device applied to a car 40 according to the 4th embodiment of the present disclosure. In Fig. 4, the electronic device includes the camera module (not shown), wherein the camera module includes an imaging lens assembly, and the image sensor module, and the image sensor module is disposed on an image side of the imaging lens assembly. Moreover, the image sensor module can be any one of the aforementioned 1st example of the 1st embodiment to the 7th example of the 1st embodiment, but the present disclosure is not limited thereto.

In the 4th embodiment, the camera modules are a front camera module 41a, a lateral camera module 41b, and a rear camera module 41c, respectively.

The front camera module 41a, the lateral camera module 41b, and the rear camera module 41c are disposed on a front end, a lateral, and a rear end of the car 40, respectively, so as to make for the drivers to obtain external space informations in addition to the car 40, such as external space informations I1, I2, I3, I4, but the present disclosure is not limited thereto. Therefore, more visual angles can be provided to reduce the blind spot, so that the driving safety can be improved.

**Claims**

1. An image sensor module (12), **characterized in** comprising:

a sensing surface (111b);
a filter element (120b) facing towards the sensing surface (111b), and comprising:

a substrate (121b);
an optical deposition layer structure (122b) disposed on one side of the substrate (121b) away from the sensing surface (111b), wherein the optical deposition layer structure (122b) is multilayered, and a layer number of the optical deposition layer structure (122b) is more than 10; and
an optical coating layer (123b) disposed corresponding to the optical deposition layer structure (122b) and on one side of the substrate (121b) facing towards the sensing surface (111b), wherein a layer number of the optical coating layer (123b) comprises one, and a thickness of the optical coating layer (123b) is between 900 nm to 5 μm; and

a first anti-reflective microstructure (141b) disposed on the sensing surface (111b), an air layer (131b) formed between the first anti-reflective microstructure (141b) and the filter element (120b), and the first anti-reflective microstructure (141b) partially overlapping with the air layer (131b) in a direction perpendicular to the sensing surface (111b);
wherein a transmittance of the filter element (120b) in a wavelength range of 450 nm to 550 nm is greater than or equal to 80%; a first wavelength greater than 550 nm that provides the transmittance of the filter element (120b) being 50% is T50; a reflectance of the first anti-reflective microstructure (141b) in a wavelength range of 450 nm to the first wavelength is less than or equal to 0.93%, and the following condition is satisfied:

$$600 \text{ nm} \leq T50 \leq 720 \text{ nm}.$$

2. The image sensor module (12) of claim 1, wherein the reflectance of the first anti-reflective microstructure (141b) in the wavelength range of 450 nm to the first wavelength is less than or equal to 0.48%.

3. The image sensor module (12) of any of claims 1-2, wherein the filter element (120b) further comprises:
a second anti-reflective microstructure (142b) disposed on one side of the optical coating layer (123b) away from the optical deposition layer structure (122b), and partially overlapping with the air layer (131b) in the direction perpendicular to the sensing surface (111b), an average reflectance of the second anti-reflective microstructure (142b) in the wavelength range of 450 nm to the first wavelength is less than 0.93%.

4. The image sensor module (12) of any of claims 1-3, further comprising:
a light blocking layer (150d) disposed between the optical coating layer (123d) and the first anti-reflective microstructure (141d).

5. The image sensor module (12) of any of claims 1-4, wherein the filter element (120b) further comprises:
an isolation layer (124b) disposed between the optical coating layer (123b) and the air layer (131b).

6. The image sensor module (12) of any of claims 1-5, wherein the substrate (121c) comprises:
a side surface (125c) extending along the optical deposition layer structure (122c) towards the optical coating layer (123c), wherein the optical coating layer (123c) is not disposed on the side surface (125c).

7. The image sensor module (12) of any of claims 1-6, further comprising:
an image sensor (110e) forming the sensing surface (111e) and a non-sensing surface (112e), wherein the non-sensing surface (112e) is adjacent to a periphery of the sensing surface (111e), and the first anti-reflective microstructure (141e) is disposed on at least one portion of the non-sensing surface (112e).

8. The image sensor module (12) of any of claims 1-6, further comprising:

an image sensor (110e) forming the sensing surface (111e) and a non-sensing surface (112e), wherein the non-sensing surface (112e) is adjacent to a periphery of the sensing surface (111e); and
a molded body (160e) formed on the image sensor (110e), the molded body (160e) comprising an inner lateral surface (161e), and the inner lateral surface (161e) facing towards a center of the sensing surface (111e), wherein the inner lateral surface (161e) extends from the non-sensing surface (112e) to a direction away from the sensing surface (111e), and the first anti-reflective microstructure (141e) is disposed on at least one portion of the inner lateral surface (161e).

9. The image sensor module (12) of any of claims 1-8, wherein the image sensor module (12) comprises:

an installing position (171e); and
a filter element holder (172e) disposed on the installing position (171e), wherein the filter element holder (172e) supports the filter element (120e), and the first anti-reflective microstructure (141e) is disposed on at least one portion of the installing position (171e).

10. The image sensor module (12) of any of claims 1-9, wherein the substrate (121b) is a red-light absorbing glass.

11. The image sensor module (12) of any of claims 1-10, wherein a reflectance of the optical deposition layer structure (122b) in the wavelength range of 450 nm to 550 nm is less than or equal to 10%; a wavelength greater than 550 nm that provides the reflectance of the optical deposition layer structure (122b) being 50% is R50; the first wavelength greater than 550 nm that provides the transmittance of the filter element (120b) being 50% is T50, and the following conditions are satisfied:

$$600 \text{ nm} \leq R50 \leq 720 \text{ nm};$$

and

$$R50 \geq T50.$$

12. The image sensor module (12) of any of claims 1-11, wherein a second wavelength less than 450 nm that provides the transmittance of the filter element (120b) being 50% is T50-B, the second wavelength is within a wavelength range of 400 nm to 450 nm, and the reflectance of the first anti-reflective microstructure (141b) in a wavelength range of the second wavelength to the first wavelength is less than or equal to 0.93%.

13. The image sensor module (12) of any of claims 1-12, wherein the optical coating layer (123b) is an organic material layer.

14. A camera module (10), **characterized in** comprising:

an imaging lens assembly (11); and
the image sensor module (12) of any of claims 1-13, wherein the image sensor module (12) is disposed on an image side of the imaging lens assembly (11).

15. An electronic device (20), **characterized in** comprising:
the camera module (10) of claim 14.

16. An image sensor module (12), **characterized in** comprising:

a sensing surface (111a);
a filter element (120a) facing towards the sensing surface (111a), and comprising:

a substrate (121a);
an optical deposition layer structure (122a) disposed on one side of the substrate (121a) away from the sensing surface (111a), wherein the optical deposition layer structure (122a) is multilayered, and a layer number of the optical deposition layer structure (122a) is more than 10; and
an optical coating layer (123a) disposed corresponding to the optical deposition layer structure (122a) and on one side of the substrate (121a) facing towards the sensing surface (111a), wherein a layer number of the optical coating layer (123a) comprises one, and a thickness of the optical coating layer (123a) is between 900 nm to 5 $\mu$m;

an air layer (131a) formed between the optical coating layer (123a) and the sensing surface (111a); and
an anti-reflective microstructure (130a) adjacent to the air layer (131a), and partially overlapping with the air layer (131a) in a direction perpendicular to the sensing surface (111a);
wherein a transmittance of the filter element (120a) in a wavelength range of 450 nm to 550 nm is greater than or equal to 80%; a first wavelength greater than 550 nm that provides the transmittance of the filter element (120a)

being 50% is T50; a reflectance of the anti-reflective microstructure (130a) in a wavelength range of 450 nm to the first wavelength is less than or equal to 0.93%, and the following condition is satisfied:

$$600 \text{ nm} \leq T50 \leq 720 \text{ nm}.$$

17. The image sensor module (12) of claim 16, wherein the reflectance of the anti-reflective microstructure (130a) in the wavelength range of 450 nm to the first wavelength is less than or equal to 0.48%.

18. The image sensor module (12) of any of claims 16-17, further comprising:
a light blocking layer (150c) disposed between the optical coating layer (123c) and the anti-reflective microstructure (130c).

19. The image sensor module (12) of any of claims 16-18, wherein the substrate (121a) comprises:
a side surface (125a) extending along a direction of a thickness of the substrate (121a), wherein the optical coating layer (123a) is not disposed on the side surface (125a).

20. The image sensor module (12) of any of claims 16-19, further comprising:
a filter element holder (172a) at least partially overlapping with a projection of the anti-reflective microstructure (130a) parallel to the sensing surface (111a), wherein the filter element (120a) is disposed on the filter element holder (172a).

21. The image sensor module (12) of any of claims 16-20, wherein the substrate (121a) is a red-light absorbing glass.

22. The image sensor module (12) of any of claims 16-21, wherein a reflectance of the optical deposition layer structure (122a) in the wavelength range of 450 nm to 550 nm is less than or equal to 10%; a wavelength greater than 550 nm that provides the reflectance of the optical deposition layer structure (122a) being 50% is R50; the first wavelength greater than 550 nm that provides the transmittance of the filter element (120a) being 50% is T50, and the following conditions are satisfied:

$$600 \text{ nm} \leq R50 \leq 720 \text{ nm};$$

and

$$R50 \geq T50.$$

23. The image sensor module (12) of any of claims 16-22, wherein a second wavelength less than 450 nm that provides the transmittance of the filter element (120a) being 50% is T50-B, the second wavelength is within a wavelength range of 400 nm to 450 nm, and the reflectance of the anti-reflective microstructure (130a) in a wavelength range of the second wavelength to the first wavelength is less than or equal to 0.93%.

24. The image sensor module (12) of any of claims 16-23, wherein the optical coating layer (123a) is an organic material layer.

25. The image sensor module (12) of any of claims 16-24, wherein the filter element (120a) further comprises:
an isolation layer (124a) disposed between the optical coating layer (123a) and the anti-reflective microstructure (130a), and the isolation layer (124a) is a multilayered film.

26. The image sensor module (12) of any of claims 16-25, wherein the transmittance of the filter element (120a) in the wavelength range of 450 nm to 550 nm is greater than or equal to 84%; a maximum value of the transmittance of the filter element (120a) in the wavelength range of 450 nm to 550 nm is greater than or equal to 88%; the reflectance of the anti-reflective microstructure (130a) in a wavelength range of 400 nm to 750 nm is less than or equal to 0.25%; a reflectance of the optical deposition layer structure (122a) in the wavelength range of 450 nm to 550 nm is less than or equal to 5%; a wavelength greater than 550 nm that provides the reflectance of the optical deposition layer structure (122a) being 50% is R50; the first wavelength greater than 550 nm that provides the transmittance of the filter element (120a) being 50% is T50, and the following conditions are satisfied:

$$600 \text{ nm} \leq T50 \leq 700 \text{ nm};$$

$$650 \text{ nm} \leq R50 \leq 720 \text{ nm};$$

and

$$R50 - T50 \geq 3 \text{ nm}.$$

27. A camera module (10), **characterized in** comprising:

an imaging lens assembly (11); and
the image sensor module (12) of any of claims 16-26, wherein the image sensor module (12) is disposed on an image side of the imaging lens assembly (11).

28. An electronic device (20), **characterized in** comprising:
the camera module (10) of claim 27.

10

11

12

13

Fig. 1A

Fig. 1B

Fig. 1C

EP 4 524 620 A1

EP 4 524 620 A1

131a

130a

OV

BL

111a

Fig. 1D

Fig. 1E

Transmittance of the filter element (%) & Reflectance of the optical deposition layer structure (%)

Reflectance of the anti-reflective microstructure (%)

Wavelength (nm)

——— Transmittance of the filter element

- - - - Reflectance of the optical deposition layer structure

— ·· — Reflectance of the anti-reflective microstructure

EP 4 524 620 A1

Fig. 1F

Fig. 1G

Fig. 1H

Fig. 1I

173e

122e
121e } 120e
123e
142e

172e

131e

161e

171e
160e

141e

112e
110e
111e
13

Fig. 1J

EP 4 524 620 A1

Fig. 1K

Fig. 1L

Fig. 1M

Fig. 1N

EP 4 524 620 A1

Fig. 10

Fig. 1P

Fig. 2A

EP 4 524 620 A1

Fig. 2B

EP 4 524 620 A1

Fig. 3

EP 4 524 620 A1

EP 4 524 620 A1

Fig. 4

Europäisches
Patentamt

European
Patent Office

Office européen
des brevets

# EUROPEAN SEARCH REPORT

Application Number

EP 24 19 9764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 111 045 126 A (OPPO GUANGDONG MOBILE TELECOMMUNICATIONS CO LTD) 21 April 2020 (2020-04-21) | 1-3,5-7, 10-17, 19-28 | INV. G02B1/118 G02B5/20 |
| A | * paragraphs [0001] - [0059]; figures 1-10 * | 4,8,9,18 | G02B5/28 |
| Y | WO 2019/022069 A1 (JSR CORP [JP]) 31 January 2019 (2019-01-31) * figures 1-3 * | 1-3,5-7, 10-17, 19-28 | |
| Y | US 2022/407993 A1 (TSAI WEN-YU [TW] ET AL) 22 December 2022 (2022-12-22) * figures 8A,8B * | 1-3,5-7, 10-17, 19-28 | |
| Y | US 2020/310017 A1 (YU AN-HWA [TW]) 1 October 2020 (2020-10-01) * figures 1-3 * | 1,16 | |
| Y | WO 2022/100297 A1 (GUANGDONG OPPO MOBILE TELECOMMUNICATIONS CORP LTD [CN]) 19 May 2022 (2022-05-19) * figures 1-6 * | 1,16 | **TECHNICAL FIELDS SEARCHED (IPC)** G02B |
| Y | US 2019/319053 A1 (SUZUKI YUSUKE [JP]) 17 October 2019 (2019-10-17) * figures 1-3 * | 3 | |
| Y | US 2022/400193 A1 (TSAI WEN-YU [TW] ET AL) 15 December 2022 (2022-12-15) * paragraphs [0048] - [0050]; figures 1-3 * | 3 | |

The present search report has been drawn up for all claims

| Place of search | Date of completion of the search | Examiner |
|---|---|---|
| Munich | 28 January 2025 | Baur, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 9764

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| CN 111045126 | A | 21-04-2020 | NONE | | |
| WO 2019022069 | A1 | 31-01-2019 | CN | 110832362 A | 21-02-2020 |
| | | | JP | 7163918 B2 | 01-11-2022 |
| | | | JP | WO2019022069 A1 | 28-05-2020 |
| | | | KR | 20200028956 A | 17-03-2020 |
| | | | TW | 201917017 A | 01-05-2019 |
| | | | WO | 2019022069 A1 | 31-01-2019 |
| US 2022407993 | A1 | 22-12-2022 | CN | 115469382 A | 13-12-2022 |
| | | | CN | 216900993 U | 05-07-2022 |
| | | | EP | 4102570 A2 | 14-12-2022 |
| | | | EP | 4428922 A2 | 11-09-2024 |
| | | | JP | 7490706 B2 | 27-05-2024 |
| | | | JP | 2022189734 A | 22-12-2022 |
| | | | JP | 2024120179 A | 04-09-2024 |
| | | | KR | 20220166725 A | 19-12-2022 |
| | | | US | 2022407993 A1 | 22-12-2022 |
| US 2020310017 | A1 | 01-10-2020 | TW | 202036043 A | 01-10-2020 |
| | | | US | 2020310017 A1 | 01-10-2020 |
| WO 2022100297 | A1 | 19-05-2022 | CN | 112449094 A | 05-03-2021 |
| | | | CN | 115348376 A | 15-11-2022 |
| | | | WO | 2022100297 A1 | 19-05-2022 |
| US 2019319053 | A1 | 17-10-2019 | CN | 110073247 A | 30-07-2019 |
| | | | JP | 7006617 B2 | 24-01-2022 |
| | | | JP | WO2018110190 A1 | 24-10-2019 |
| | | | US | 2019319053 A1 | 17-10-2019 |
| | | | WO | 2018110190 A1 | 21-06-2018 |
| US 2022400193 | A1 | 15-12-2022 | CN | 115469437 A | 13-12-2022 |
| | | | EP | 4102263 A1 | 14-12-2022 |
| | | | US | 2022400193 A1 | 15-12-2022 |
| | | | US | 2024388784 A1 | 21-11-2024 |

EPO FORM P0459

For more details about this annex : see Official Journal of the European Patent Office, No. 12/82